# DEMANDE DE BREVET EUROPEEN

(11) **EP 4 641 047 A1**
(43) Date de publication de la demande: **29.10.2025**
(21) Numéro de dépôt: 25172673.3
(22) Date de dépôt: 25.04.2025
(51) Int. Cl.: F16H 1/28

(54) **RÉDUCTEUR POUR UN ACTIONNEUR ÉLECTROMÉCANIQUE, ACTIONNEUR ÉLECTROMÉCANIQUE ET DISPOSITIF D OCCULTATION ASSOCIÉS**

(30) Priorité: 26.04.2024 FR 2404365
(71) Demandeur: Somfy Activites SA, 74300 Cluses (FR)
(72) Inventeur: FOISSARD, Margaux, 74300 CLUSES (FR); BRONDEX, Adrien, 74300 CLUSES (FR); MARCHAL, Diane, 74300 CLUSES (FR)
(74) Mandataire: Lavoix

(57) **Abrégé**

Un réducteur (19) comprend un étage de réduction (37), qui comprend un pignon solaire (40) et des pignons satellites (63). Le pignon solaire (40) comprend une première et une deuxième dentures (42, 64), séparées par une collerette (41). Chaque pignon satellite (63) comprend une troisième et une quatrième dentures (49, 50), disposées côte à côte à une distance prédéterminée l'une de l'autre, de sorte à former une fente (51). La collerette (41) est disposée à l'intérieur de la fente (51). Un deuxième flanc de la troisième denture (49) et un premier flanc de la quatrième denture (50) définissent entre eux la fente (51) et comprennent respectivement une portée (52). En outre, les portées (52) guident la collerette (41).

## Description

La présente invention concerne un réducteur pour un actionneur électromécanique, autrement dit un réducteur d'un actionneur électromécanique, ainsi qu'un actionneur électromécanique pour un dispositif d'occultation, autrement dit un actionneur électromécanique d'un dispositif d'occultation, comprenant un tel réducteur. Le réducteur est pourvu d'au moins un étage de réduction de type épicycloïdal.

La présente invention concerne également un dispositif d'occultation comprenant un écran entraîné en déplacement par un tel actionneur électromécanique.

De manière générale, la présente invention concerne le domaine des dispositifs d'occultation comprenant un dispositif d'entraînement motorisé mettant en mouvement un écran, entre au moins une première position et au moins une deuxième position.

Un dispositif d'entraînement motorisé comprend un actionneur électromécanique d'un élément mobile de fermeture, d'occultation ou de protection solaire tel qu'un volet, une porte, une grille, un store ou tout autre matériel équivalent, appelé par la suite écran.

On connaît déjà le document FR 2 742 834 A1 qui décrit un réducteur pour un actionneur électromécanique. Le réducteur comprend un étage de réduction de type épicycloïdal et une couronne. La couronne comprend une denture interne. L'étage de réduction comprend un pignon solaire, une pluralité de pignons satellites et un porte-satellites. Le pignon solaire est engrené avec chaque pignon satellite. Chaque pignon satellite est engrené avec la denture interne de la couronne. Le porte-satellites supporte chacun des pignons satellites en rotation, autour d'un axe de rotation. Le pignon solaire comprend une première denture et une deuxième denture. Les première et deuxième dentures sont disposées côte à côte à une première distance prédéterminée l'une de l'autre et séparées par une collerette, selon une direction définie par un axe de rotation du pignon solaire. Chaque pignon satellite comprend une troisième denture et une quatrième denture. Les troisième et quatrième dentures sont disposées côte à côte à une deuxième distance prédéterminée l'une de l'autre, selon une direction définie par un axe de rotation du pignon satellite, de sorte à former une fente entre les troisième et quatrième dentures. La collerette du pignon solaire est disposée à l'intérieur de la fente ménagée entre les troisième et quatrième dentures du pignon satellite. Chacune des troisième et quatrième dentures de chaque pignon satellite comprend un premier flanc et un deuxième flanc, le deuxième flanc étant opposé au premier flanc. Les premier et deuxième flancs sont orthogonaux à l'axe de rotation du pignon satellite. Le deuxième flanc de la troisième denture et le premier flanc de la quatrième denture sont disposés en vis-à-vis, selon la direction de l'axe de rotation du pignon satellite. En outre, le deuxième flanc de la troisième denture et le premier flanc de la quatrième denture définissent entre eux la fente du pignon satellite.

Cet actionneur électromécanique présente l'inconvénient que la collerette du pignon solaire peut venir en contact avec le deuxième flanc de la troisième denture et le premier flanc de la quatrième denture de chaque pignon satellite et, par conséquent, frotter contre ceux-ci, lors d'un entraînement en rotation du pignon solaire.

Par conséquent, ce frottement peut engendrer une perte de rendement et un bruit de fonctionnement de l'étage de réduction.

La présente invention a pour but de résoudre les inconvénients précités et de proposer un réducteur pour un actionneur électromécanique pourvu d'au moins un étage de réduction de type épicycloïdal, un actionneur électromécanique pour un dispositif d'occultation comprenant un tel réducteur, ainsi qu'un dispositif d'occultation comprenant un tel actionneur électromécanique, permettant d'améliorer le rendement et de réduire le bruit de fonctionnement de l'étage de réduction.

A cet égard, la présente invention vise, selon un premier aspect, un réducteur pour un actionneur électromécanique,
le réducteur comprenant au moins :
   - un arbre d'entrée,
   - un étage de réduction de type épicycloïdal,
   - une couronne, la couronne comprenant une denture interne, et
   - un arbre de sortie,
l'étage de réduction comprenant au moins :
   - un pignon solaire,
   - une pluralité de pignons satellites, le pignon solaire étant engrené avec chaque pignon satellite, chaque pignon satellite étant engrené avec la denture interne de la couronne, et
   - un porte-satellites, le porte-satellites supportant chacun des pignons satellites en rotation, autour d'un axe de rotation,
le pignon solaire comprenant :
   - une première denture, et
   - une deuxième denture, les première et deuxième dentures étant disposées côte à côte à une première distance prédéterminée l'une de l'autre et séparées par une collerette, selon une direction définie par un axe de rotation du pignon solaire,
chaque pignon satellite comprenant :
   - une troisième denture, et
   - une quatrième denture, les troisième et quatrième dentures étant disposées côte à côte à une deuxième distance prédéterminée l'une de l'autre, selon une direction définie par l'axe de rotation du pignon satellite, de sorte à former une fente entre les troisième et quatrième dentures, la collerette du pignon solaire étant disposée à l'intérieur de la fente ménagée entre les troisième et quatrième dentures du pignon satellite,
chacune des troisième et quatrième dentures de chaque pignon satellite comprenant un premier flanc et un deuxième flanc, le deuxième flanc étant opposé au premier flanc, les premier et deuxième flancs étant orthogonaux à l'axe de rotation du pignon satellite, le deuxième flanc de la troisième denture et le premier flanc de la quatrième denture étant disposés en vis-à-vis, selon la direction de l'axe de rotation du pignon satellite, et le deuxième flanc de la troisième denture et le premier flanc de la quatrième denture définissant entre eux la fente du pignon satellite.

Selon l'invention, le deuxième flanc de la troisième denture et le premier flanc de la quatrième denture comprennent respectivement une portée. Les portées ménagées sur le deuxième flanc de la troisième denture et le premier flanc de la quatrième denture guident la collerette du pignon solaire, selon la direction de l'axe de rotation du pignon solaire. En outre, chacune des portées est définie par une surface décalée d'une distance non nulle par rapport à une surface constituant le deuxième flanc de la troisième denture ou le premier flanc de la quatrième denture vers l'intérieur de la fente, selon la direction de l'axe de rotation du pignon satellite.

Ainsi, la collerette du pignon solaire peut venir en contact et, par conséquent, frotter contre les portées en saillie par rapport au deuxième flanc de la troisième denture et au premier flanc de la quatrième denture de chaque pignon satellite, lors d'un entraînement en rotation du pignon solaire, sans frotter contre le deuxième flanc de la troisième denture et le premier flanc de la quatrième denture de chaque pignon satellite.

Autrement dit, le pignon solaire est recentré par les portées ménagées sur le deuxième flanc de la troisième denture et le premier flanc de la quatrième denture de chaque pignon satellite, et non pas directement par le deuxième flanc de la troisième denture et le premier flanc de la quatrième denture de chaque pignon satellite.

De cette manière, la présence des portées ménagées sur le deuxième flanc de la troisième denture et le premier flanc de la quatrième denture de chaque pignon satellite permet d'améliorer le rendement et de réduire le bruit de fonctionnement de l'étage de réduction.

En outre, cette solution permet de réduire le niveau d'exigence qualité du pignon solaire et des pignons satellites, en diminuant l'exigence sur les défauts géométriques des flancs des troisième et quatrième dentures des pignons satellites et sur la collerette du pignon solaire.

De cette manière, la fabrication du pignon solaire et des pignons satellites est facilitée et est moins onéreuse.

Selon une caractéristique avantageuse de l'invention, les première et deuxième dentures sont des dentures droites. En outre, les troisième et quatrième dentures sont des dentures droites.

Selon une autre caractéristique avantageuse de l'invention, la deuxième denture est décalée angulairement d'un demi pas par rapport à la première denture, autour de l'axe de rotation du pignon solaire.

Selon une autre caractéristique avantageuse de l'invention, les portées correspondent respectivement à une surépaisseur par rapport au deuxième flanc de la troisième denture et par rapport au premier flanc de la quatrième denture, s'étendant selon la direction de l'axe de rotation du pignon satellite et selon une direction radiale à l'axe de rotation du pignon satellite.

Selon une autre caractéristique avantageuse de l'invention, la première denture du pignon solaire comprend une première partie et une deuxième partie. Les dents de la deuxième partie de la première denture sont tronquées. En outre, la deuxième partie de la première denture constitue l'arbre d'entrée du réducteur.

Selon une autre caractéristique avantageuse de l'invention, la première distance prédéterminée correspond à une largeur de la collerette. En outre, la deuxième distance prédéterminée correspond à une largeur de la fente.

Selon une autre caractéristique avantageuse de l'invention, chacune des portées a une forme de cylindre s'étendant respectivement à partir du deuxième flanc de la troisième denture ou du premier flanc de la quatrième denture vers l'intérieur de la fente, selon la direction de l'axe de rotation du pignon satellite.

La présente invention vise, selon un deuxième aspect, un actionneur électromécanique pour un dispositif d'occultation,
l'actionneur électromécanique comprenant au moins :
   - un carter,
   - un moteur électrique, et
   - un réducteur conforme à l'invention et tel que mentionné ci-dessus, le réducteur étant accouplé avec le moteur électrique,
le moteur électrique et le réducteur étant logés à l'intérieur du carter.

Cet actionneur électromécanique présente des caractéristiques et avantages analogues à ceux décrits précédemment, en relation avec le réducteur selon l'invention.

Selon une autre caractéristique avantageuse de l'invention, l'actionneur électromécanique comprend, en outre, un dispositif de transmission de couple. Le dispositif de transmission de couple comprend un logement. En outre, la première denture du pignon solaire est insérée à l'intérieur d'une forme du logement du dispositif de transmission de couple.

La présente invention vise, selon un troisième aspect, un dispositif d'occultation,
le dispositif d'occultation comprenant au moins :
- un écran, et
- un actionneur électromécanique conforme à l'invention et tel que mentionné ci-dessus, l'écran étant entraîné en déplacement par l'actionneur électromécanique.

Ce dispositif d'occultation présente des caractéristiques et avantages analogues à ceux décrits précédemment, en relation avec l'actionneur électromécanique selon l'invention.

D'autres particularités et avantages de l'invention apparaîtront encore dans la description ci-après, faite en référence aux dessins annexés, donnés à titre d'exemples non limitatifs et dans lesquels :
[Fig 1] la figure 1 est une vue schématique en coupe transversale d'une installation comprenant un dispositif d'occultation conforme à un mode de réalisation de l'invention ;
[Fig 2] la figure 2 est une vue schématique en perspective de l'installation illustrée à la figure 1 ;
[Fig 3] la figure 3 est une vue schématique en perspective d'un dispositif d'entraînement motorisé de l'installation illustrée aux figures 1 et 2, ce dispositif d'entraînement motorisé comprenant un actionneur électromécanique conforme à l'invention et un tube d'enroulement ;
[Fig 4] la figure 4 est une vue schématique en coupe de l'actionneur électromécanique illustré à la figure 3, selon un plan de coupe passant par un axe de rotation de l'actionneur électromécanique, cette vue schématique en coupe étant interrompue localement au niveau d'une partie de l'actionneur électromécanique ;
[Fig 5] la figure 5 est une première vue schématique en perspective et éclatée d'une partie de l'actionneur électromécanique illustré à la figure 4, montrant un moteur électrique, un cardan, un réducteur conforme à l'invention et un arbre de sortie ;
[Fig 6] la figure 6 est une deuxième vue schématique en perspective et éclatée d'une partie de l'actionneur électromécanique illustré aux figures 4 et 5, montrant le cardan, le réducteur et, plus particulièrement, un premier étage de réduction, et l'arbre de sortie ;
[Fig 7] la figure 7 est une vue schématique en coupe, de détail et à plus grande échelle, correspondant à l'encadré VII de la figure 4, d'une partie de l'actionneur électromécanique illustré aux figures 4 à 6, montrant le cardan et le premier étage de réduction ;
[Fig 8] la figure 8 est une vue schématique en perspective d'une partie du premier étage de réduction illustré aux figures 6 et 7, montrant un pignon solaire et des pignons satellites ;
[Fig 9] la figure 9 est une vue schématique en perspective de l'un des pignons satellites du premier étage de réduction illustré aux figures 6 à 8 ; et [Fig 10] la figure 10 est une vue schématique en perspective du pignon solaire du premier étage de réduction illustré aux figures 6 à 8.

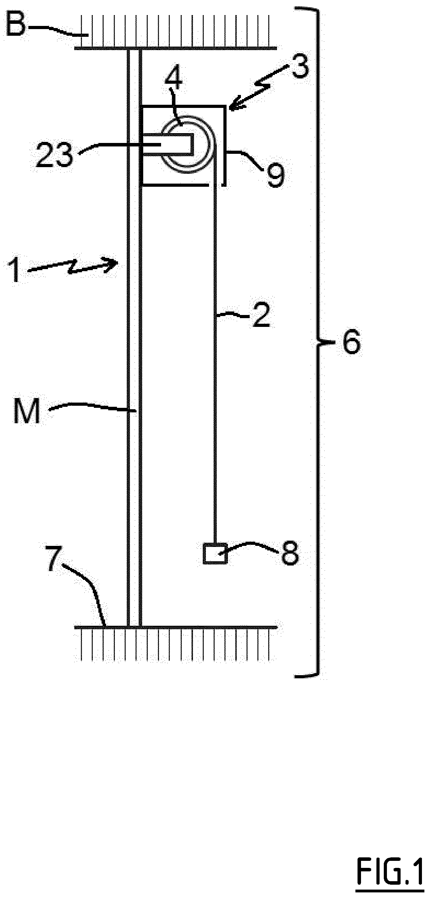

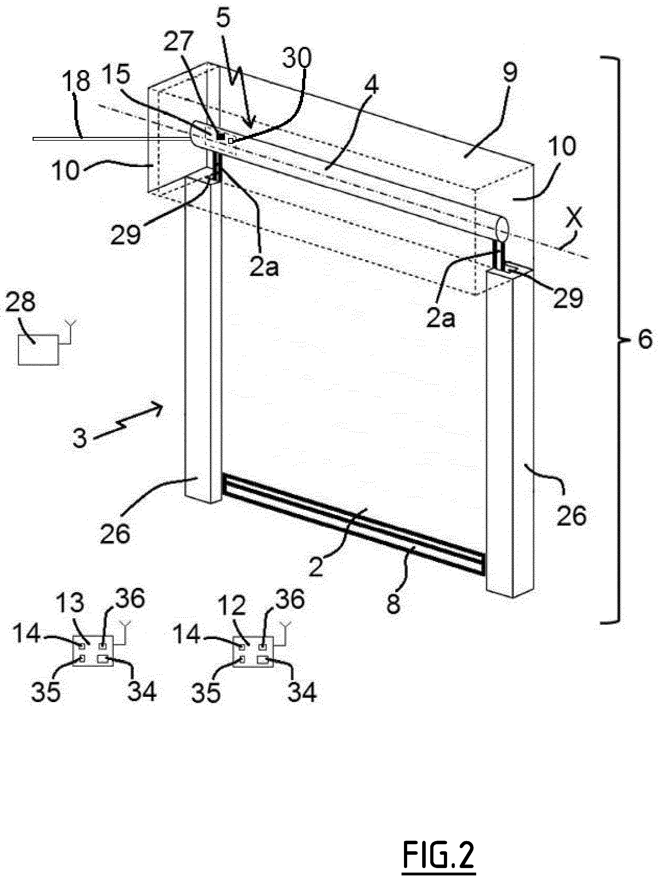

On décrit tout d'abord, en référence aux figures 1 et 2, une installation 6 comprenant un dispositif de fermeture, d'occultation ou de protection solaire 3 conforme à un mode de réalisation de l'invention. Cette installation 6, installée dans un bâtiment B, comporte une ouverture 1, dans laquelle est disposée une fenêtre ou une porte, non représentée. Cette installation 6 est équipée d'un écran 2 appartenant au dispositif de fermeture, d'occultation ou de protection solaire 3, en particulier un store motorisé.

Le dispositif de fermeture, d'occultation ou de protection solaire 3 est par la suite appelé « dispositif d'occultation ». Le dispositif d'occultation 3 comprend l'écran 2.

Le dispositif d'occultation 3 peut être un store, notamment un store comprenant une toile enroulable, un store comprenant un écran plissé ou alvéolé ou un store avec des lames orientables, ou un volet roulant. La présente invention s'applique à tous les types de dispositif d'occultation.

Ici, l'installation 6 comprend le dispositif d'occultation 3.

On décrit, en référence aux figures 1 et 2, un store enroulable conforme à un mode de réalisation de l'invention.

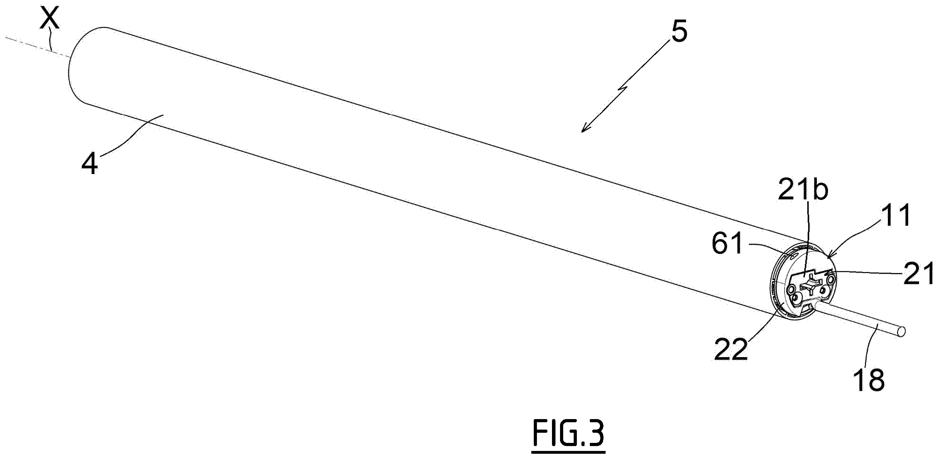

Le dispositif d'occultation 3 comprend un dispositif d'entraînement motorisé 5. Le dispositif d'entraînement motorisé 5 comprend un actionneur électromécanique 11 illustré aux figures 3 à 6.

L'écran 2 est configuré pour être déplacé, autrement dit est déplacé, au moyen du dispositif d'entraînement motorisé 5 et, plus particulièrement, de l'actionneur électromécanique 11.

Avantageusement, le dispositif d'entraînement motorisé 5 et, par conséquent, le dispositif d'occultation 3 comprend, en outre, un tube d'enroulement 4. En outre, le tube d'enroulement 4 est agencé de sorte à être entraîné en rotation par l'actionneur électromécanique 11.

Ici, l'écran 2 est enroulable sur le tube d'enroulement 4.

Ainsi, l'écran 2 du dispositif d'occultation 3 est enroulé sur le tube d'enroulement 4 ou déroulé autour de celui-ci, le tube d'enroulement 4 étant entraîné par le dispositif d'entraînement motorisé 5, en particulier par l'actionneur électromécanique 11.

De cette manière, l'écran 2 est mobile entre une position enroulée, en particulier haute, et une position déroulée, en particulier basse, et inversement.

L'écran 2 du dispositif d'occultation 3 est un écran de fermeture, d'occultation et/ou de protection solaire, s'enroulant et se déroulant autour du tube d'enroulement 4, dont le diamètre intérieur est supérieur au diamètre externe de l'actionneur électromécanique 11, de sorte que l'actionneur électromécanique 11 peut être inséré dans le tube d'enroulement 4, lors de l'assemblage du dispositif d'occultation 3.

Avantageusement, le dispositif d'occultation 3 comprend un dispositif de maintien 9, 23.

Avantageusement, le dispositif de maintien 9, 23 peut comprendre deux supports 23. Un support 23 est disposé à chaque extrémité du tube d'enroulement 4, en particulier dans une configuration assemblée du dispositif d'occultation 3.

Ainsi, le tube d'enroulement 4 est maintenu par l'intermédiaire des supports 23. Un seul des supports 23 est visible à la figure 1 et ceux-ci ne sont pas représentés à la figure 2. Les supports 23 permettent de lier mécaniquement le dispositif d'occultation 3 à la structure du bâtiment B, notamment à un mur M du bâtiment B.

Avantageusement, le dispositif de maintien 9, 23 peut comprendre un caisson 9. En outre, le tube d'enroulement 4 et au moins une partie de l'écran 2 sont logés à l'intérieur du caisson 9, en particulier dans la configuration assemblée du dispositif d'occultation 3.

De manière générale, le caisson 9 est disposé au-dessus de l'ouverture 1, ou encore en partie supérieure de l'ouverture 1.

Ici et comme illustré à la figure 1, les supports 23 sont également logés à l'intérieur du caisson 9.

Avantageusement, le caisson 9 comprend deux joues 10, telles qu'illustrées à la figure 2. Une joue 10 est disposée à chaque extrémité du caisson 9, en particulier dans la configuration assemblée du dispositif d'occultation 3.

En variante, représentée à la figure 2, le tube d'enroulement 4 est maintenu par l'intermédiaire du caisson 9, en particulier par l'intermédiaire des joues 10 du caisson 9, sans utiliser des supports, tels que les supports 23 mentionnés ci-dessus.

Avantageusement, le dispositif d'occultation 3 peut également comprendre deux coulisses latérales 26, comme illustré uniquement à la figure 2. Chaque coulisse latérale 26 comprend une gorge 29. Chaque gorge 29 de l'une des coulisses latérales 26 coopère, autrement dit est configurée pour coopérer, avec un bord latéral 2a de l'écran 2, en particulier dans la configuration assemblée du dispositif d'occultation 3, de sorte à guider l'écran 2, lors de l'enroulement et du déroulement de l'écran 2 autour du tube d'enroulement 4.

L'actionneur électromécanique 11 est, par exemple, de type tubulaire. Celui-ci permet de mettre en rotation le tube d'enroulement 4 autour d'un axe de rotation X, de sorte à déplacer, en particulier dérouler ou enrouler, l'écran 2 du dispositif d'occultation 3.

Dans un état monté du dispositif d'occultation 3, l'actionneur électromécanique 11 est inséré dans le tube d'enroulement 4.

Avantageusement, le dispositif d'occultation 3 comprend, en outre, une barre de charge 8 pour exercer une tension sur l'écran 2.

Le store enroulable, qui forme le dispositif d'occultation 3, comporte une toile, formant l'écran 2 du store enroulable 3. Une première extrémité de l'écran 2, en particulier l'extrémité supérieure de l'écran 2, dans la configuration assemblée du dispositif d'occultation 3, est fixée au tube d'enroulement 4. En outre, une deuxième extrémité de l'écran 2, en particulier l'extrémité inférieure de l'écran 2, dans la configuration assemblée du dispositif d'occultation 3, est fixée à la barre de charge 8.

Ici, la toile formant l'écran 2 est réalisée à partir d'un matériau textile.

Dans un exemple de réalisation, non représenté, la première extrémité de l'écran 2 présente un ourlet au travers duquel est disposée une tige, en particulier en matière plastique. Cet ourlet réalisé au niveau de la première extrémité de l'écran 2 est obtenu au moyen d'une couture de la toile formant l'écran 2. Lors de l'assemblage de l'écran 2 sur le tube d'enroulement 4, l'ourlet et la tige situés au niveau de la première extrémité de l'écran 2 sont insérés par coulissement dans une rainure, non représentée, ménagée sur la face externe du tube d'enroulement 4, en particulier sur toute la longueur du tube d'enroulement 4, de sorte à solidariser l'écran 2 avec le tube d'enroulement 4 et à pouvoir enrouler et dérouler l'écran 2 autour du tube d'enroulement 4.

Le mode de fixation de l'écran 2 sur le tube d'enroulement 4 n'est pas limitatif et peut être différent. Il peut être mis en œuvre, par exemple, au moyen d'un adhésif ou d'une ou plusieurs articulations fixées, notamment par vissage ou par rivetage, au tube d'enroulement 4.

Quel que soit le mode de réalisation, la première extrémité de l'écran 2 est disposée au niveau du dispositif de maintien 9, 23.

Dans le cas d'un store enroulable, la position haute enroulée correspond à une position de fin de course haute prédéterminée, ou encore à la mise en appui de la barre de charge 8 de l'écran 2 contre un bord du caisson 9 du store enroulable 3, et la position basse déroulée correspond à une position de fin de course basse prédéterminée, ou à la mise en appui de la barre de charge 8 de l'écran 2 contre un seuil 7 de l'ouverture 1, ou encore au déroulement complet de l'écran 2.

Avantageusement, le dispositif d'entraînement motorisé 5 est commandé par une unité de commande. L'unité de commande peut être, par exemple, une unité de commande locale 12 ou une unité de commande centrale 13.

Avantageusement, l'unité de commande locale 12 peut être reliée, en liaison filaire ou non filaire, avec l'unité de commande centrale 13.

Avantageusement, l'unité de commande centrale 13 peut piloter l'unité de commande locale 12, ainsi que d'autres unités de commande locales similaires et réparties dans le bâtiment B.

Le dispositif d'entraînement motorisé 5 est, de préférence, configuré pour exécuter les commandes de déplacement, notamment de déroulement ou d'enroulement, de l'écran 2 du dispositif d'occultation 3, pouvant être émises, notamment, par l'unité de commande locale 12 ou l'unité de commande centrale 13.

L'installation 6 comprend soit l'unité de commande locale 12, soit l'unité de commande centrale 13, soit l'unité de commande locale 12 et l'unité de commande centrale 13.

Des moyens de commande de l'actionneur électromécanique 11, permettant le déplacement de l'écran 2 du dispositif d'occultation 3, sont constitués par au moins une unité de contrôle 15, en particulier une unité électronique de contrôle.

Cette unité de contrôle 15 appartient au dispositif d'entraînement motorisé 5 et, plus particulièrement, à l'actionneur électromécanique 11. Celle-ci est apte à mettre en fonctionnement un moteur électrique 16 de l'actionneur électromécanique 11 et, en particulier, à permettre l'alimentation en énergie électrique du moteur électrique 16.

Ainsi, l'unité de contrôle 15 commande, notamment, le moteur électrique 16, de sorte à ouvrir ou fermer l'écran 2, comme décrit précédemment.

Les moyens de commande de l'actionneur électromécanique 11 comprennent des moyens matériels et/ou logiciels.

A titre d'exemple nullement limitatif, les moyens matériels peuvent comprendre au moins un microcontrôleur 30, comme illustré à la figure 2.

Avantageusement, l'unité de contrôle 15 comprend, en outre, un premier module de communication 27, comme illustré à la figure 2, en particulier de réception d'ordres de commande, les ordres de commande étant émis par un émetteur d'ordres, tel que l'unité de commande locale 12 ou l'unité de commande centrale 13, ces ordres étant destinés à commander le dispositif d'entraînement motorisé 5.

Avantageusement, le premier module de communication 27 de l'unité de contrôle 15 est de type sans fil. En particulier, le premier module de communication 27 est configuré pour recevoir des ordres de commande radioélectriques.

Avantageusement, le premier module de communication 27 peut également ou en variante permettre la réception d'ordres de commande transmis par des moyens filaires.

Avantageusement, l'unité de contrôle 15, l'unité de commande locale 12 et/ou l'unité de commande centrale 13 peuvent être en communication avec une station météorologique disposée à l'intérieur du bâtiment B ou déportée à l'extérieur du bâtiment B, incluant, notamment, un ou plusieurs capteurs pouvant être configurés pour déterminer, par exemple, une température, une luminosité, ou encore une vitesse de vent, dans le cas où la station météorologique est déportée à l'extérieur du bâtiment B.

Avantageusement, l'unité de contrôle 15, l'unité de commande locale 12 et/ou l'unité de commande centrale 13 peuvent également être en communication avec un serveur 28, tel qu'illustré à la figure 2, de sorte à contrôler l'actionneur électromécanique 11 suivant des données mises à disposition à distance par l'intermédiaire d'un réseau de communication, en particulier un réseau internet pouvant être relié au serveur 28.

L'unité de contrôle 15 peut être commandée à partir de l'unité de commande locale 12 et/ou de l'unité de commande centrale 13. L'unité de commande locale 12 et/ou l'unité de commande centrale 13 est pourvue d'un clavier de commande. Le clavier de commande de l'unité de commande locale 12 ou de l'unité de commande centrale 13 comprend un ou plusieurs éléments de sélection 14 et, éventuellement, un ou plusieurs éléments d'affichage 34.

A titre d'exemples nullement limitatifs, les éléments de sélection peuvent être des boutons poussoirs et/ou des touches sensitives. Les éléments d'affichage peuvent être des diodes électroluminescentes et/ou un afficheur, par exemple LCD (acronyme du terme anglo-saxon « Liquid Crystal Display ») ou TFT (acronyme du terme anglo-saxon « Thin Film Transistor »). Les éléments de sélection et d'affichage peuvent être également réalisés au moyen d'un écran tactile.

Avantageusement, l'unité de commande locale 12 et/ou l'unité de commande centrale 13 comprend au moins un deuxième module de communication 36.

Ainsi, le deuxième module de communication 36 de l'unité de commande locale 12 ou de l'unité de commande centrale 13 est configuré pour émettre, autrement dit émet, des ordres de commande, en particulier par des moyens sans fil, par exemple radioélectriques, et/ou par des moyens filaires.

En outre, le deuxième module de communication 36 de l'unité de commande locale 12 ou de l'unité de commande centrale 13 peut également être configuré pour recevoir, autrement dit reçoit, des ordres de commande, en particulier par l'intermédiaire des mêmes moyens.

Avantageusement, le deuxième module de communication 36 de l'unité de commande locale 12 ou de l'unité de commande centrale 13 est configuré pour communiquer, autrement dit communique, avec le premier module de communication 27 de l'unité de contrôle 15.

Ainsi, le deuxième module de communication 36 de l'unité de commande locale 12 ou de l'unité de commande centrale 13 échange des ordres de commande avec le premier module de communication 27 de l'unité de contrôle 15, soit de manière monodirectionnelle, soit de manière bidirectionnelle.

Avantageusement, l'unité de commande locale 12 est un point de commande, pouvant être fixe ou nomade. Un point de commande fixe peut être un boîtier de commande destiné à être fixé sur une façade du mur M du bâtiment B ou sur une face d'un cadre dormant d'une fenêtre ou d'une porte. Un point de commande nomade peut être une télécommande, un téléphone intelligent ou une tablette.

Avantageusement, l'unité de commande locale 12 et/ou l'unité de commande centrale 13 comprend, en outre, un contrôleur 35.

Le dispositif d'entraînement motorisé 5, en particulier l'unité de contrôle 15, est, de préférence, configuré pour exécuter des ordres de commande de déplacement, notamment de fermeture ainsi que d'ouverture, de l'écran 2 du dispositif d'occultation 3. Ces ordres de commande peuvent être émis, notamment, par l'unité de commande locale 12 ou par l'unité de commande centrale 13.

Le dispositif d'entraînement motorisé 5 peut être contrôlé par l'utilisateur, par exemple par la réception d'un ordre de commande correspondant à un appui sur le ou l'un des éléments de sélection 14 de l'unité de commande locale 12 ou de l'unité de commande centrale 13.

Avantageusement, l'installation d'occultation 6 comprend, en outre, au moins un capteur, non représenté.

Avantageusement, le capteur comprend au moins un deuxième module de communication 36, tel que celui décrit en référence à l'unité de commande locale 12 ou à l'unité de commande centrale 13. En outre, le deuxième module de communication 36 du capteur est configuré pour communiquer, autrement dit communique, avec le premier module de communication 27 de l'unité de contrôle 15.

Avantageusement, le capteur peut être, par exemple, un capteur d'éclairement, un capteur de température, un capteur d'humidité ou un capteur de vent.

Ainsi, le dispositif d'entraînement motorisé 5 peut également être contrôlé automatiquement par la réception d'un ordre de commande correspondant à au moins un signal provenant du capteur.

En complément ou en variante, le dispositif d'entraînement motorisé 5 peut également être contrôlé automatiquement par la réception d'un ordre de commande correspondant à au moins un signal provenant d'une horloge, non représentée, de l'unité de contrôle 15, en particulier du microcontrôleur 30.

En complément ou en variante, le capteur et/ou l'horloge peuvent être intégrés à l'unité de commande locale 12 ou à l'unité de commande centrale 13.

On décrit à présent, plus en détail et en référence aux figures 3 à 6, le dispositif d'entraînement motorisé 5, y compris l'actionneur électromécanique 11, appartenant à l'installation 6 et, plus particulièrement, au dispositif d'occultation 3 illustré aux figures 1 et 2.

L'actionneur électromécanique 11 comprend un carter 17, en particulier tubulaire, le moteur électrique 16 et un réducteur 19.

Le réducteur 19 est accouplé, autrement dit est configuré pour être accouplé, avec le moteur électrique 16, en particulier dans une configuration assemblée de l'actionneur électromécanique 11.

Ici, le moteur électrique 16 et le réducteur 19 sont logés, autrement dit sont montés, à l'intérieur du carter 17, en particulier dans la configuration assemblée de l'actionneur électromécanique 11.

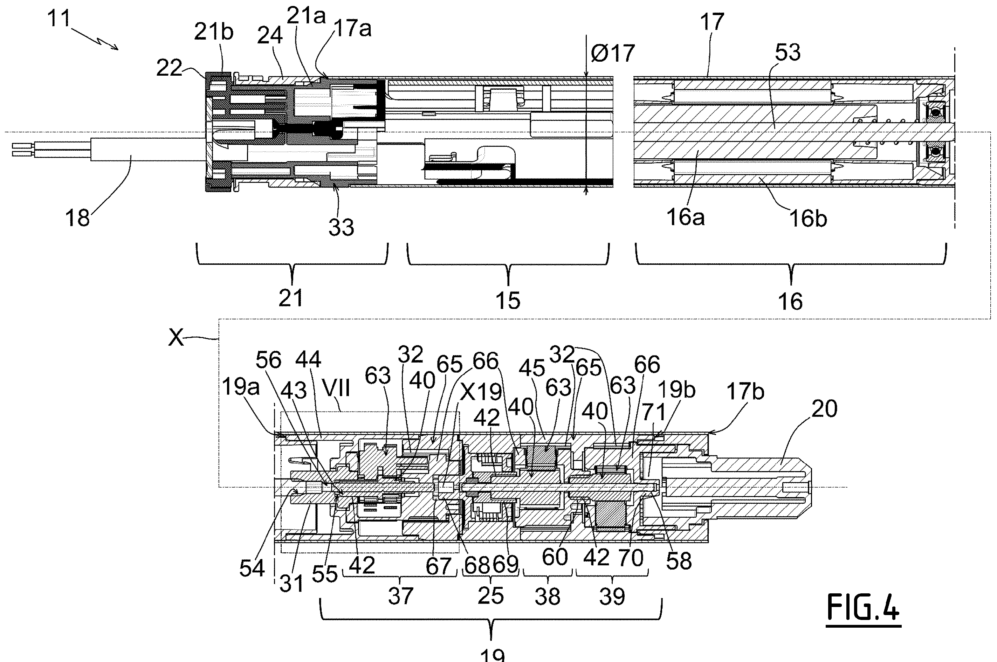

Avantageusement, le moteur électrique 16 comprend un rotor 16a et un stator 16b, comme illustré à la figure 4.

Ici, le rotor 16a et le stator 16b sont positionnés de manière coaxiale autour de l'axe de rotation X, qui est également l'axe de rotation du tube d'enroulement 4 en configuration montée du dispositif d'entraînement motorisé 5.

Avantageusement, le moteur électrique 16 peut être de type sans balais à commutation électronique, appelé également « BLDC » (acronyme du terme anglo-saxon BrushLess Direct Current) ou « synchrone à aimants permanents », de type à courant continu ou de type asynchrone.

Avantageusement, le rotor 16a du moteur électrique 16 comprend un arbre 53.

Ici, le carter 17 est creux. Le carter 17 comprend une première extrémité 17a et une deuxième extrémité 17b. La deuxième extrémité 17b est opposée à la première extrémité 17a.

Ici, le carter 17 de l'actionneur électromécanique 11 est de forme cylindrique, notamment de révolution autour de l'axe de rotation X, et est ouvert à chacune de ses extrémités 17a, 17b.

Avantageusement, le carter 17 est un tube présentant une section circulaire.

Ici, le carter 17 est réalisé dans un matériau métallique.

La matière du carter de l'actionneur électromécanique n'est pas limitative et peut être différente. Il peut s'agir, en particulier, d'une matière plastique.

Avantageusement, l'actionneur électromécanique 11 comprend, en outre, une couronne 24, pouvant également être appelée manchon, comme illustrée à la figure 4.

La couronne 24 est disposée, autrement dit est configurée pour être disposée, au voisinage de la première extrémité 17a du carter 17, en particulier dans la configuration assemblée de l'actionneur électromécanique 11.

Avantageusement, le dispositif d'entraînement motorisé 5 et, plus particulièrement, l'actionneur électromécanique 11 comprend, en outre, un câble d'alimentation électrique 18, comme illustré aux figures 2 et 4.

Avantageusement, l'unité de contrôle 15 peut être alimentée en énergie électrique au moyen du câble d'alimentation électrique 18 connecté électriquement à au moins une source d'alimentation en énergie électrique, non représentée, pouvant être, par exemple, un réseau d'alimentation en énergie électrique, notamment du secteur ou dit « PoE » (acronyme du terme anglo-saxon Power over Ethernet), et/ou à une batterie, qui peut être rechargeable, notamment au moyen d'un panneau photovoltaïque et/ou d'un chargeur, non représenté, ou au travers du réseau d'alimentation en énergie électrique.

Ainsi, le câble d'alimentation électrique 18 permet une alimentation en énergie électrique de l'actionneur électromécanique 11, en particulier de l'unité de contrôle 15 et du moteur électrique 16, à partir de la ou des source(s) d'alimentation en énergie électrique.

Avantageusement, l'actionneur électromécanique 11 comprend, en outre, un arbre de sortie 20. En outre, l'arbre de sortie 20 de l'actionneur électromécanique 11 est disposé, autrement dit est configuré pour être disposé, au voisinage de la deuxième extrémité 17b du carter 17, en particulier dans la configuration assemblée de l'actionneur électromécanique 11.

Avantageusement, l'arbre de sortie 20 de l'actionneur électromécanique 11 est disposé à l'intérieur du tube d'enroulement 4 et au moins en partie à l'extérieur du carter 17 de l'actionneur électromécanique 11.

Avantageusement, une extrémité de l'arbre de sortie 20 de l'actionneur électromécanique 11 est en saillie par rapport au carter 17 de l'actionneur électromécanique 11, en particulier par rapport à la deuxième extrémité 17b du carter 17.

Avantageusement, l'arbre de sortie 20 de l'actionneur électromécanique 11 est configuré pour entraîner en rotation un élément de liaison, non représenté, relié au tube d'enroulement 4. L'élément de liaison est, par exemple, réalisé sous la forme d'une roue. Cet élément de liaison est solidaire en rotation, autour de l'axe de rotation X, à la fois de l'arbre de sortie 20 et du tube d'enroulement 4.

Lors de la mise en fonctionnement de l'actionneur électromécanique 11, le moteur électrique 16 et le réducteur 19 entraînent en rotation l'arbre de sortie 20 de l'actionneur électromécanique 11. En outre, l'arbre de sortie 20 de l'actionneur électromécanique 11 entraîne en rotation le tube d'enroulement 4 par l'intermédiaire de l'élément de liaison.

Ainsi, le tube d'enroulement 4 entraîne en rotation l'écran 2 du dispositif d'occultation 3, de sorte à ouvrir ou fermer l'ouverture 1.

Avantageusement, l'actionneur électromécanique 11 comprend, en outre, un frein 25.

Le frein 25 est configuré pour freiner et/ou pour bloquer en rotation l'arbre de sortie 20 de l'actionneur électromécanique 11, de sorte à réguler la vitesse de rotation du tube d'enroulement 4, lors d'un déplacement de l'écran 2, et à maintenir bloqué le tube d'enroulement 4, lorsque l'actionneur électromécanique 11 est désactivé électriquement.

Avantageusement, le frein 25 est logé, autrement dit est monté, à l'intérieur du carter 17 de l'actionneur électromécanique 11, en particulier dans la configuration assemblée de l'actionneur électromécanique 11.

Ici, le frein 25 est un frein à ressort.

Le réducteur 19 comprend au moins un étage de réduction 37, 38, 39. L'étage de réduction 37, 38, 39, l'un des étages de réduction 37, 38, 39 ou chaque étage de réduction 37, 38, 39 est de type épicycloïdal.

Ici et comme illustré à la figure 4, le réducteur 19 comprend trois étages de réduction 37, 38, 39. Chacun des trois étages de réduction 37, 38, 39 est de type épicycloïdal. Les trois étages de réduction 37, 38, 39 sont appelés par la suite premier étage de réduction 37, deuxième étage de réduction 38 et troisième étage de réduction 39.

Le nombre d'étages de réduction du réducteur n'est pas limitatif. Le nombre d'étages de réduction peut être de un, de deux ou supérieur ou égal à quatre.

Ici et comme illustré à la figure 4, le frein 25 est configuré pour être disposé, autrement dit est disposé, entre deux étages de réduction 37, 38, 39, en particulier entre le premier étage de réduction 37 et le deuxième étage de réduction 38 du réducteur 19, en particulier dans la configuration assemblée de l'actionneur électromécanique 11.

Avantageusement, le réducteur 19 comprend une première extrémité 19a et une deuxième extrémité 19b. La deuxième extrémité 19b est opposée à la première extrémité 19a. La première extrémité 19a du réducteur 19 est disposée en face du moteur électrique 16, autrement dit fait face au moteur électrique 16, en particulier dans la configuration assemblée de l'actionneur électromécanique 11. En outre, la deuxième extrémité 19b du réducteur 19 est disposée en face de l'arbre de sortie 20 de l'actionneur électromécanique 11, autrement dit fait face à l'arbre de sortie 20 de l'actionneur électromécanique 11, en particulier dans la configuration assemblée de l'actionneur électromécanique 11

Ici, le premier étage de réduction 37 est disposé au niveau de la première extrémité 19a du réducteur 19. Le troisième étage de réduction 39 est disposé au niveau de la deuxième extrémité 19b du réducteur 19. En outre, le deuxième étage de réduction 38 est disposé entre le premier étage de réduction 37 et le troisième étage de réduction 39 et, plus particulièrement entre le frein 25 et le troisième étage de réduction 39.

L'un ou chacun des premier, deuxième et troisième étages de réduction 37, 38, 39 comprend un pignon solaire 40 et une pluralité de pignons satellites 63, pouvant être, par exemple, au nombre de trois.

Le pignon solaire 40 et les pignons satellites 63 du premier étage de réduction 37 peuvent être appelés premier pignon solaire et premiers pignons satellites. Le pignon solaire et les pignons satellites du deuxième étage de réduction 38 peuvent être appelés deuxième pignon solaire et deuxièmes pignons satellites. En outre, le pignon solaire et les pignons satellites du troisième étage de réduction 39 peuvent être appelés troisième pignon solaire et troisièmes pignons satellites.

On note X19 un axe de rotation du réducteur 19.

On note X40 un axe de rotation du ou de chaque pignon solaire 40.

On note X63 un axe de rotation de chaque pignon satellite 63.

L'axe de rotation X40 du ou de chaque pignon solaire 40 est confondu avec l'axe de rotation X19 du réducteur 19. Par conséquent, l'axe de rotation X40 et l'axe de rotation X19 sont représentés par un même trait d'axe sur les figures.

Avantageusement, les pignons satellites 63 du ou de chacun des premier, deuxième et troisième étages de réduction 37, 38, 39 sont régulièrement répartis, autour de l'axe de rotation X19.

Le nombre de pignons satellites des premier, deuxième et troisième étages de réduction n'est pas limitatif et peut être différent. Le nombre de pignons satellites d'un étage de réduction peut être de deux ou plus.

Dans le ou chacun des premier, deuxième et troisième étages de réduction 37, 38, 39, le pignon solaire 40 est engrené, autrement dit est configuré pour être engrené, avec chaque pignon satellite 63 de cet étage de réduction 37, 38, 39, en particulier dans une configuration assemblée du réducteur 19.

Avantageusement, dans le ou chacun des premier, deuxième et troisième étages de réduction 37, 38, 39, les pignons satellites 63 sont identiques, au moins par groupes de pignons satellites d'un étage de réduction 37, 38, 39.

Avantageusement, dans le ou chacun des premier, deuxième et troisième étages de réduction 37, 38, 39, les axes de rotation X63 des pignons satellites 63 sont excentrés par rapport à l'axe de rotation X19 du réducteur 19 et, plus particulièrement, par rapport à l'axe de rotation X40 du pignon solaire 40 de cet étage de réduction 37, 38, 39, en particulier dans la configuration assemblée du réducteur 19.

Ainsi, pour un étage de réduction 37, 38, 39 donné, l'axe de rotation X63 de chaque pignon satellite 63 est parallèle à, et radialement décalé de, l'axe de rotation X19 du réducteur 19 et, plus particulièrement, parallèle à, et radialement décalé de, l'axe de rotation X40 du pignon solaire 40.

Le réducteur 19 comprend, en outre, un arbre d'entrée 43.

Avantageusement, le pignon solaire 40 du premier étage de réduction 37 comprend un arbre 59.

Le réducteur 19 comprend, en outre, un arbre de sortie 58.

Ici, l'arbre de sortie 58 du réducteur 19 est disposé, autrement dit est configuré pour être disposé, à l'intérieur de l'arbre de sortie 20 de l'actionneur électromécanique 11, en particulier dans la configuration assemblée de l'actionneur électromécanique 11.

En variante, non représentée, l'arbre de sortie 20 de l'actionneur électromécanique 11 constitue l'arbre de sortie 58 du réducteur 19. Autrement dit, dans ce cas, les parties 20 et 58 sont formées par une seule pièce monobloc.

Avantageusement, l'arbre d'entrée 43 et l'arbre de sortie 58 du réducteur 19 sont coaxiaux, autrement dit sont configurés pour être coaxiaux, en particulier dans la configuration assemblée du réducteur 19.

Ainsi, l'arbre d'entrée 43 et l'arbre de sortie 58 du réducteur 19 sont disposés suivant le même axe de rotation X19, qui est également l'axe de rotation du réducteur 19, en particulier dans la configuration assemblée du réducteur 19.

Le réducteur 19 comprend, en outre, au moins une couronne 65. La ou chacune des couronnes 65 comprend une denture interne 32.

Avantageusement, chaque pignon satellite 63 du ou de chaque étage de réduction 37, 38, 39 comprend une denture 72, appelée par la suite cinquième denture.

Ici, le réducteur 19 comprend deux couronnes 65. L'une des deux couronnes 65 est formée par le regroupement d'une deuxième couronne du deuxième étage de réduction 38 avec une troisième couronne du troisième étage de réduction 39. Chacun des pignons satellites 63 des deuxième et troisième étages de réduction 38, 39, en l'occurrence la cinquième denture 72 de chacun des pignons satellites 63, est engrené, autrement dit est configuré pour être engrené, avec la même couronne 65, en l'occurrence avec la denture interne 32 de cette couronne 65, en particulier dans la configuration assemblée du réducteur 19. Dans ce cas, cette unique couronne 65, représentée à la figure 4, appartient à la fois aux deuxième et troisième étages de réduction 38, 39. Chacun des pignons satellites 63 du premier étage de réduction 37, en l'occurrence la cinquième denture 72 de chacun de ces pignons satellites 63, est engrené, autrement dit est configuré pour être engrené, avec l'autre couronne 65, en l'occurrence avec la denture interne 32 de l'autre couronne 65, en particulier dans la configuration assemblée du réducteur 19. En outre, dans ce cas, l'autre couronne 65, représentée aux figures 4, 6 et 7, est formée par la première couronne 65 du premier étage de réduction 37.

Avantageusement, la première couronne 65 du premier étage de réduction 37 est réalisée soit en acier soit en matière plastique.

A titre d'exemple nullement limitatif, l'acier de la première couronne 65 du premier étage de réduction 37 est de l'acier fritté.

A titre d'exemple nullement limitatif, la matière plastique de la première couronne 65 du premier étage de réduction 37 est du Poly-Butylène Téréphtalate, également appelé PBT, du poly-acétal, également appelé POM, du PolyAmide 6, également appelé polycaprolactame ou PA 6, du PolyAmide 6.6, également appelé polyhexaméthylène adipamide ou PA 6.6.

En variante, non représentée, l'une des deux couronnes 65 est formée par le regroupement d'une première couronne du premier étage de réduction 37 avec une deuxième couronne du deuxième étage de réduction 38. Chacun des pignons satellites 63 des premier et deuxième étages de réduction 37, 38, en l'occurrence la cinquième denture 72 de chacun des pignons satellites 63, est engrené autrement dit est configuré pour être engrené, avec la même couronne 65, en l'occurrence avec la denture interne 32 de cette couronne 65, en particulier dans la configuration assemblée du réducteur 19. Dans ce cas, cette unique couronne 65 appartient à la fois aux premier et deuxième étages de réduction 37, 38. Chacun des pignons satellites 63 du troisième étage de réduction 39, en l'occurrence la cinquième denture 72 de chacun de ces pignons satellites 63, est engrené autrement dit est configuré pour être engrené, avec l'autre couronne 65, en l'occurrence avec la denture interne 32 de l'autre couronne 65, en particulier dans la configuration assemblée du réducteur 19. En outre, dans ce cas, l'autre couronne 65 est formée par la troisième couronne 65 du troisième étage de réduction 39.

En variante, non représentée, le réducteur 19 comprend trois couronnes 65. Les trois couronnes 65 peuvent être appelées première couronne, deuxième couronne et troisième couronne. Chaque pignon satellite 63 de chacun des premier, deuxième et troisième étages de réduction 37, 38, 39, en l'occurrence la cinquième denture 72 de chacun des pignons satellites 63, est engrené, autrement dit est configuré pour être engrené, avec la couronne 65, en l'occurrence avec la denture interne 32 de la couronne 65, de cet étage de réduction 37, 38, 39, en particulier dans la configuration assemblée du réducteur 19. Dans ce cas, les première, deuxième et troisième couronnes 65 appartiennent respectivement aux premier, deuxième et troisième étages de réduction 37, 38, 39.

Dans une autre variante, non représentée, le réducteur 19 comprend une unique couronne 65. Dans ce cas, chaque pignon satellite 63 de chacun des premier, deuxième et troisième étages de réduction 37, 38, 39, en l'occurrence la cinquième denture 72 de chacun des pignons satellites 63, est engrené, autrement dit est configuré pour être engrené, avec l'unique couronne 65, en l'occurrence avec la denture interne 32 de l'unique couronne 65, en particulier dans la configuration assemblée du réducteur 19. Dans ce cas, cette unique couronne 65 appartient à la fois aux premier, deuxième et troisième étages de réduction 37, 38, 39.

Le ou chacun des premier, deuxième et troisième étages de réduction 37, 38, 39 comprend, en outre, un porte-satellites 66. Le ou chaque porte-satellites 66 supporte, autrement dit est configuré pour supporter, chacun des pignons satellites 63 en rotation, autour de l'axe de rotation X63, en particulier dans la configuration assemblée du réducteur 19.

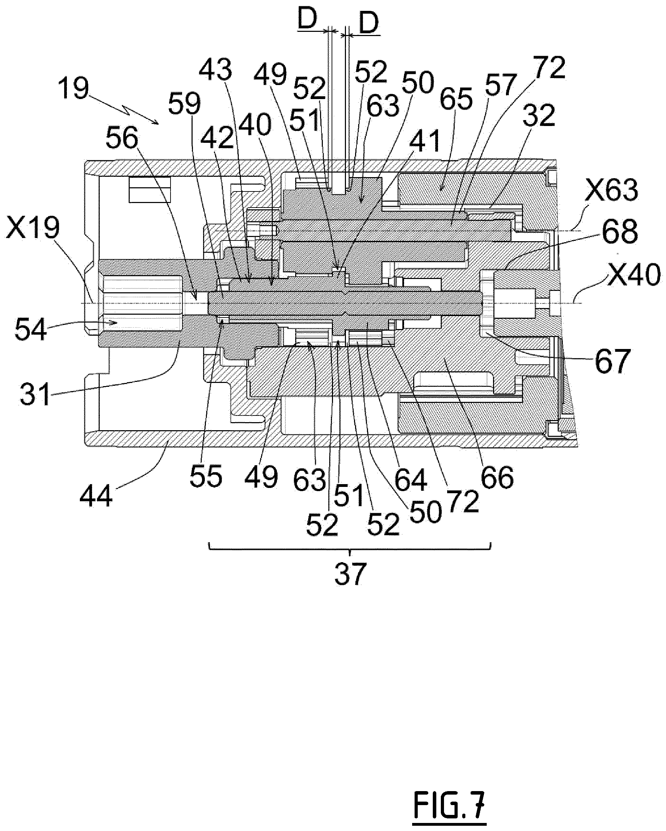

Avantageusement, chaque pignon satellite 63 du ou de chacun des premier, deuxième et troisième étages de réduction 37, 38, 39 comprend un arbre 57, comme illustré à la figure 7.

Avantageusement, l'arbre 59 du pignon solaire 40 est monté libre en rotation à l'intérieur du porte-satellites 66 du ou de chacun des premier, deuxième et troisième étages de réduction 37, 38, 39. En outre, l'arbre 57 de chaque pignon satellite 63 est monté libre en rotation à l'intérieur du porte-satellites 66 du ou de chacun des premier, deuxième et troisième étages de réduction 37, 38, 39.

Avantageusement, le porte-satellites 66 du premier étage de réduction 37 comprend une interface d'accouplement 67. En outre, l'interface d'accouplement 67 du porte-satellites 66 du premier étage de réduction 38 coopère, autrement dit est configurée pour coopérer, soit avec une interface d'accouplement d'entrée 68 du frein 25, soit avec le pignon solaire 40 du deuxième étage de réduction 38, en particulier dans la configuration assemblée de l'actionneur électromécanique 11.

Ici, l'interface d'accouplement 67 du porte-satellites 66 du premier étage de réduction 37 est une denture interne. L'interface d'accouplement d'entrée 68 du frein 25 est une denture externe. En outre, en particulier dans la configuration assemblée de l'actionneur électromécanique 11, l'interface d'accouplement 67 du porte-satellites 66 du premier étage de réduction 37 s'engrène, autrement dit est configurée pour s'engrener, soit avec l'interface d'accouplement d'entrée 68 du frein 25, soit avec le pignon solaire 40 du deuxième étage de réduction 38, notamment avec une première denture 42 du pignon solaire 40 du deuxième étage de réduction 38.

Ainsi, l'interface d'accouplement 67 du porte-satellites 66 du premier étage de réduction 37 permet de recevoir et de transmettre un couple provenant du moteur électrique 16 et, en l'occurrence, du premier étage de réduction 37 au frein 25 ou au deuxième étage de réduction 39.

Dans l'exemple de réalisation illustré à la figure 4, le frein 25 comprend une interface d'accouplement de sortie 69. En outre, l'interface d'accouplement de sortie 69 du frein 25 coopère, autrement dit est configurée pour coopérer, avec le pignon solaire 40 du deuxième étage de réduction 38, en particulier dans la configuration assemblée de l'actionneur électromécanique 11.

Ici, l'interface d'accouplement de sortie 69 du frein 25 est une denture interne. En outre, en particulier dans la configuration assemblée de l'actionneur électromécanique 11, l'interface d'accouplement de sortie 69 du frein 25 s'engrène, autrement dit est configurée pour s'engrener, avec le pignon solaire 40 du deuxième étage de réduction 38, notamment avec la première denture 42 du pignon solaire 40 du deuxième étage de réduction 38.

Ainsi, l'interface d'accouplement de sortie 69 du frein 25 permet de recevoir et de transmettre un couple provenant du moteur électrique 16 et, en l'occurrence, du frein 25 au deuxième étage de réduction 39.

Avantageusement, le porte-satellites 66 du deuxième étage de réduction 38 comprend une interface d'accouplement 60. En outre, l'interface d'accouplement 60 du porte-satellites 66 du deuxième étage de réduction 38 coopère, autrement dit est configurée pour coopérer, avec le pignon solaire 40 du troisième étage de réduction 39, en particulier dans la configuration assemblée de l'actionneur électromécanique 11.

Ici, l'interface d'accouplement 60 du porte-satellites 66 du deuxième étage de réduction 38 est une denture interne. En outre, en particulier dans la configuration assemblée de l'actionneur électromécanique 11, l'interface d'accouplement 60 du porte-satellites 66 du deuxième étage de réduction 38 s'engrène, autrement dit est configurée pour s'engrener, avec le pignon solaire 40 du troisième étage de réduction 39, notamment avec la première denture 42 du pignon solaire 40 du troisième étage de réduction 39.

Ainsi, l'interface d'accouplement 60 du porte-satellites 66 du deuxième étage de réduction 38 permet de recevoir et de transmettre un couple provenant du moteur électrique 16 et, en l'occurrence, du deuxième étage de réduction 38 au troisième étage de réduction 39.

Avantageusement, le porte-satellites 66 du troisième étage de réduction 39 comprend une interface d'accouplement 70. En outre, l'interface d'accouplement 70 du porte-satellites 66 du troisième étage de réduction 39 coopère, autrement dit est configurée pour coopérer, avec une autre interface d'accouplement 71 de l'arbre de sortie 20 de l'actionneur électromécanique 11, en particulier dans la configuration assemblée de l'actionneur électromécanique 11.

Ici, l'interface d'accouplement 70 du porte-satellites 66 du troisième étage de réduction 39 est une denture interne. L'autre interface d'accouplement 71 de l'arbre de sortie 20 est une denture externe. En outre, en particulier dans la configuration assemblée de l'actionneur électromécanique 11, l'interface d'accouplement 70 du porte-satellites 66 du troisième étage de réduction 39 s'engrène, autrement dit est configurée pour s'engrener, avec l'autre interface d'accouplement 71 de l'arbre de sortie 20.

Ainsi, l'interface d'accouplement 70 du porte-satellites 66 du troisième étage de réduction 39 permet de recevoir et de transmettre un couple provenant du moteur électrique 16 et, en l'occurrence, du troisième étage de réduction 39 à l'arbre de sortie 20. Dans ce cas, l'interface d'accouplement 70 du porte-satellites 66 du troisième étage de réduction 39 constitue l'arbre de sortie 58 du réducteur 19.

Avantageusement, le porte-satellites 66 du ou de chacun des premier, deuxième et troisième étages de réduction 37, 38, 39 est réalisé en matière plastique.

A titre d'exemple nullement limitatif, la matière plastique du porte-satellites 66 du ou de chacun des premier, deuxième et troisième étages de réduction 37, 38, 39 est du poly-butylène téréphtalate, également appelé PBT, ou du poly-acétal, également appelé POM.

Avantageusement, le porte-satellites 66 du troisième étage de réduction 39 est solidaire de l'arbre de sortie 58 du réducteur 19.

Ainsi, l'arbre de sortie 58 du réducteur 19 est entraîné en rotation, en particulier par l'intermédiaire du porte-satellites 66 du troisième étage de réduction 39, lorsque l'arbre d'entrée 43 du réducteur 19 est entraîné en rotation, notamment lors d'une activation électrique du moteur électrique 16 provoquant l'entraînement en rotation du rotor 16a.

Ici, le porte-satellites 66 du troisième étage de réduction 39 et l'arbre de sortie 58 du réducteur 19 forment une unique pièce, en particulier l'interface d'accouplement 70, pouvant être réalisée, par exemple, par frittage. Cette pièce peut être réalisée, notamment, dans une matière plastique ou dans une matière métallique.

En variante, non représentée, le porte-satellites 66 du troisième étage de réduction 39 et l'arbre de sortie 58 du réducteur 19 forment deux pièces distinctes. Dans ce cas, dans la configuration assemblée du réducteur 19, les deux pièces sont reliées, autrement dit sont configurées pour être reliées, ensemble au moyen d'éléments de fixation, pouvant être démontables. A titre d'exemples nullement limitatifs, les éléments de fixation peuvent être du type par encliquetage élastique ou par vissage.

Avantageusement, le réducteur 19 comprend un premier capot 44 et un deuxième capot 45. Le premier capot 44 est disposé au niveau de la première extrémité 19a du réducteur 19. En outre, le deuxième capot 45 est disposé au niveau de la deuxième extrémité 19b du réducteur 19.

Ici, le premier capot 44 et la couronne 65 du premier étage de réduction 37 forment deux pièces distinctes. Dans ce cas, dans la configuration assemblée du réducteur 19, les deux pièces sont reliées, autrement dit sont configurées pour être reliées ensemble, soit par emmanchement, soit par surmoulage, soit au moyen d'éléments de fixation, pouvant être démontables. A titre d'exemples nullement limitatifs, les éléments de fixation peuvent être du type par encliquetage élastique ou par vissage. En outre, le deuxième capot 45 est intégré à la couronne 65 des deuxième et troisième étages de réduction 38, 39, de sorte à former une unique pièce. Dans ce cas, l'unique pièce peut être réalisée, par exemple, par frittage. Cette pièce peut être réalisée, notamment, dans une matière plastique ou dans une matière métallique.

En variante, non représentée, dans la configuration assemblée du réducteur 19, le premier capot 44 est intégré à la couronne 65 du premier étage de réduction 37, de sorte à former une unique pièce.

En variante, non représentée, le deuxième capot 45 et la couronne 65 des deuxième et troisième étages de réduction 38, 39 forment deux pièces distinctes.

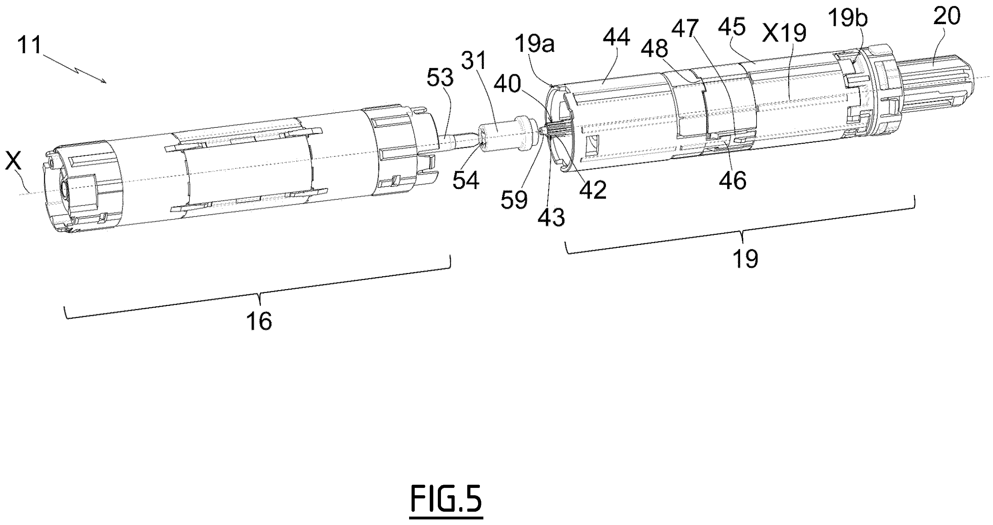

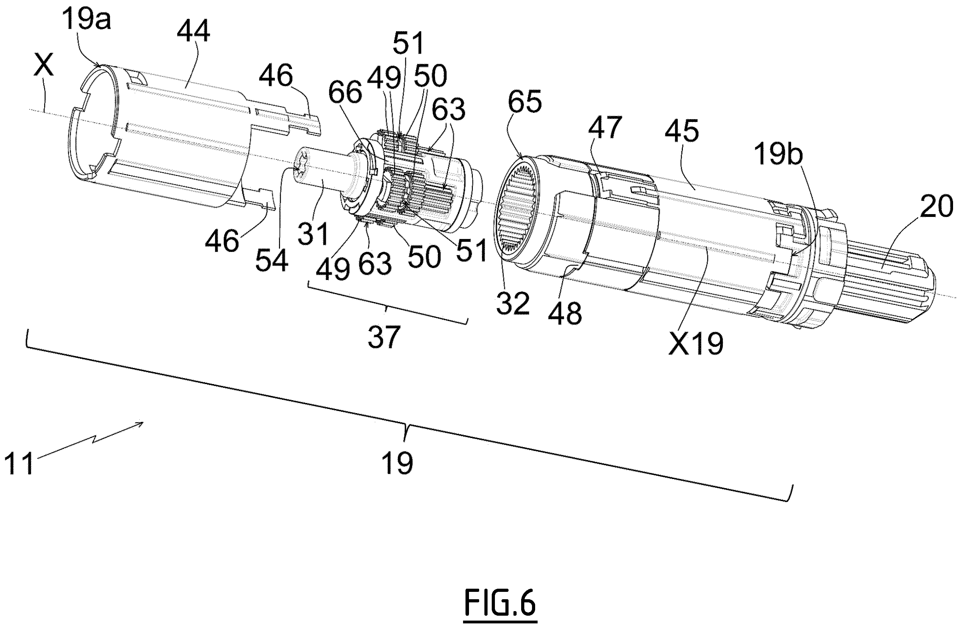

Avantageusement, dans la configuration assemblée du réducteur 19, le premier capot 44 est fixé, autrement dit est configuré pour être fixé, au deuxième capot 45, au moyen d'éléments de fixation 46, dont un seul est représenté à la figure 5 et dont deux sont visibles à la figure 6, en particulier dans la configuration assemblée du réducteur 19.

Ici, les éléments de fixation 46 sont des éléments de fixation par encliquetage élastique, au nombre de deux et disposés de façon diamétralement opposée par rapport à l'axe de rotation X19, autrement dit à 180° l'un par rapport à l'autre, autour de l'axe de rotation X19.

Le nombre et le type des éléments de fixation ne sont pas limitatifs et peuvent être différents. Ils peuvent être, par exemple, au nombre de trois et disposés avec un angle de 120° l'un par rapport à l'autre, autour de l'axe de rotation du réducteur. Ils peuvent également être, par exemple, des éléments de fixation par vissage.

Avantageusement, dans la configuration assemblée du réducteur 19, le frein 25 est maintenu, autrement dit est configuré pour être maintenu, par les premier et deuxième capots 44, 45, au moyen d'éléments de blocage 47, dont un seul est visible aux figures 5 et 6.

Ici, les éléments de blocage 47 sont des éléments de blocage en rotation, autour de l'axe de rotation X19, tels que des éléments en saillie coopérant avec des échancrures de forme correspondante. Ces éléments de blocage 47 sont au nombre de deux et disposés de façon diamétralement opposée par rapport à l'axe de rotation X19, autrement dit à 180° l'un par rapport à l'autre, autour de l'axe de rotation X19.

Le nombre et le type des éléments de blocage ne sont pas limitatifs et peuvent être différents. Ils peuvent être, par exemple, au nombre de trois et disposés avec un angle de 120° l'un par rapport à l'autre, autour de l'axe de rotation du réducteur.

Avantageusement, dans la configuration assemblée du réducteur 19, le frein 25 est maintenu, autrement dit est configuré pour être maintenu, par la couronne 65 du premier étage de réduction 37, au moyen d'éléments d'indexation 48, dont un seul est visible aux figures 5 et 6.

Ici, les éléments d'indexation 48 sont des éléments de blocage en rotation, autour de l'axe de rotation X19, tels que des éléments en saillie coopérant avec des échancrures de forme correspondante. Ces éléments d'indexation 48 sont au nombre de deux et disposés de façon diamétralement opposée par rapport à l'axe de rotation X19, autrement dit à 180° l'un par rapport à l'autre, autour de l'axe de rotation X19.

Le nombre et le type des éléments d'indexation ne sont pas limitatifs et peuvent être différents. Ils peuvent être, par exemple, au nombre de trois et disposés avec un angle de 120° l'un par rapport à l'autre, autour de l'axe de rotation du réducteur.

Avantageusement, le réducteur 19 peut comprendre, en outre, une bague de montage, non représentée. La bague de montage est disposée, autrement est configurée pour être disposée, entre le réducteur 19 et le carter 17, en particulier dans la configuration assemblée de l'actionneur électromécanique 11. La bague de montage est, éventuellement, fixée, autrement dit est configurée pour être fixée, au carter 17 de l'actionneur électromécanique 11 au moyen d'au moins un élément de fixation, non représenté.

Par exemple, la bague de montage peut être fixée au carter 17 au moyen d'une vis de fixation, non représentée, traversant un trou de passage, non représenté, ménagé dans le carter 17 et se vissant dans un trou de fixation de la bague de fixation.

Le nombre et le type des éléments de fixation de la bague de montage au carter ne sont pas limitatifs. Ils peuvent être, par exemple, au nombre de deux ou plus. Ils peuvent être également, par exemple, des éléments de fixation par rivetage.

Avantageusement, l'actionneur électromécanique 11 comprend, en outre, un dispositif de détection de fin de course et/ou d'obstacle, lors du déplacement de l'écran 2. Ce dispositif peut être mécanique ou électronique.

Avantageusement, le dispositif de détection de fin de course et/ou d'obstacle est mis en œuvre au moyen du microcontrôleur 30 de l'unité de contrôle 15 et, en particulier, au moyen d'un algorithme mis en œuvre par ce microcontrôleur 30.

Le tube d'enroulement 4 est entraîné en rotation autour de l'axe de rotation X et du carter 17 de l'actionneur électromécanique 11 en étant soutenu par l'intermédiaire de deux liaisons pivot. La première liaison pivot est réalisée au niveau d'une première extrémité du tube d'enroulement 4 au moyen de la couronne 24. La couronne 24 permet ainsi de réaliser un palier. La deuxième liaison pivot, non représentée, est réalisée au niveau d'une deuxième extrémité du tube d'enroulement 4, opposée à la première extrémité.

La couronne 24 forme, autrement dit est configurée pour former ou constituer, un palier de guidage en rotation du tube d'enroulement 4, autour du carter 17 de l'actionneur électromécanique 11, en particulier dans une configuration assemblée du dispositif d'entraînement motorisé 5 et, par conséquent, du dispositif d'occultation 3.

Avantageusement, l'actionneur électromécanique 11 comprend, en outre, un support de couple 21.

Ici, le support de couple 21 est disposé au niveau de la première extrémité 17a du carter 17 de l'actionneur électromécanique 11, en particulier dans la configuration assemblée de l'actionneur électromécanique 11.

Le support de couple 21 permet de reprendre les efforts exercés par l'actionneur électromécanique 11, en particulier le couple exercé par l'actionneur électromécanique 11, par rapport à la structure du bâtiment B. Le support de couple 21 permet avantageusement de reprendre, en outre, des efforts exercés par le tube d'enroulement 4, notamment le poids du tube d'enroulement 4, de l'actionneur électromécanique 11 et de l'écran 2, et d'assurer la reprise de ces efforts par la structure du bâtiment B.

Ainsi, le support de couple 21 permet de fixer l'actionneur électromécanique 11 sur le dispositif de maintien 9, 23, en particulier à l'un des supports 23 ou à l'une des joues 10 du caisson 9.

Avantageusement, le support de couple 21 est en saillie au niveau de la première extrémité 17a du carter 17 de l'actionneur électromécanique 11.

Avantageusement, le support de couple 21 obture, autrement dit est configuré pour obturer, la première extrémité 17a du carter 17, en particulier dans la configuration assemblée de l'actionneur électromécanique 11.

Par ailleurs, le support de couple 21 de l'actionneur électromécanique 11 peut permettre de supporter au moins une partie de l'unité de contrôle 15.

Avantageusement, le support de couple 21 est fixé au carter 17 au moyen d'un ou plusieurs éléments de fixation, non représentés, en particulier dans la configuration assemblée de l'actionneur électromécanique 11. Le ou les éléments de fixation peuvent être, notamment, des bossages, des vis de fixation, des éléments de fixation par encliquetage élastique, des rainures emmanchées dans des échancrures ou une combinaison de ces différents éléments de fixation.

Avantageusement, le support de couple 21 comprend une première partie 21a, pouvant également être appelée « point fixe », et une deuxième partie 21b, pouvant également être appelée « tête d'actionneur ».

Avantageusement, la première partie 21a du support de couple 21 est assemblée, autrement dit est configurée pour être assemblée, avec le carter 17, en particulier dans la configuration assemblée de l'actionneur électromécanique 11. En outre, la deuxième partie 21b du support de couple 21 est configurée pour être assemblée, autrement dit est assemblée, avec le dispositif de maintien 9, 23, en particulier dans une configuration assemblée de l'actionneur électromécanique 11 dans le dispositif d'occultation 3.

Dans un exemple de réalisation, la deuxième partie 21b du support de couple 21 est assemblée, autrement dit est configurée pour être assemblée, sur la première partie 21a du support de couple 21, en particulier dans la configuration assemblée de l'actionneur électromécanique 11. Dans ce cas, la deuxième partie 21b du support de couple 21 est assemblée sur la première partie 21a du support de couple 21 au moyen d'éléments d'assemblage.

Ainsi, le support de couple 21 est constitué d'au moins deux pièces distinctes formant chacune respectivement les première et deuxième parties 21a, 21b du support de couple 21.

De cette manière, la deuxième partie 21b du support de couple 21 peut être interchangeable par rapport à la première partie 21a du support de couple 21, notamment en fonction de la forme et du type des éléments de maintien, non représentés, du dispositif de maintien 9, 23.

Dans un autre exemple de réalisation, non représenté, le support de couple 21 peut être constitué d'une seule pièce formant les première et deuxième parties 21a, 21b du support de couple 21.

Avantageusement, la deuxième partie 21b du support de couple 21 peut présenter différentes formes extérieures, notamment une forme cannelée, dite « en étoile », autrement dit comprenant des reliefs sur son contour, ou une forme ronde, autrement dit dépourvue de reliefs sur son contour, comme illustrée aux figures 3 et 4.

Avantageusement, au moins une portion de la première partie 21a du support de couple 21 est de forme générale cylindrique et est disposée, autrement dit est configurée pour être disposée, à l'intérieur du carter 17, en particulier dans la configuration assemblée de l'actionneur électromécanique 11.

Avantageusement, un diamètre extérieur d'au moins une portion de la deuxième partie 21b du support de couple 21 est supérieur à un diamètre extérieur Ø17 du carter 17.

Avantageusement, le support de couple 21 comprend, en outre, une butée 33. En outre, la butée est en appui, autrement dit est configurée pour être en appui, contre le carter 17, au niveau de la première extrémité 17a du carter 17, en particulier dans la configuration assemblée de l'actionneur électromécanique 11.

Ainsi, la butée 33 du support de couple 21 permet de limiter l'enfoncement de la première partie 21a du support de couple 21 dans le carter 17, suivant la direction de l'axe de rotation X.

Ici, la butée 33 du support de couple 21 comprend un épaulement. Plus particulièrement, elle est réalisée sous la forme d'une collerette, en particulier de forme cylindrique et à génératrice rectiligne.

Ici et comme illustré à la figure 4, la couronne 24 est disposée ou insérée, autrement dit est configurée pour être disposée ou insérée, autour du support de couple 21, en particulier de la première partie 21a du support de couple 21, notamment dans la configuration assemblée de l'actionneur électromécanique 11. Dans ce cas, la couronne 24 est montée libre en rotation autour du support de couple 21, en particulier de la première partie 21a du support de couple 21.

En variante, non représentée, la couronne 24 est disposée ou insérée, autrement dit est configurée pour être disposée ou insérée, autour d'une partie du carter 17, en particulier dans la configuration assemblée de l'actionneur électromécanique 11. Dans ce cas, la couronne 24 est montée libre en rotation autour du carter 17.

Dans une autre variante, non représentée, la couronne 24 est disposée ou insérée, autrement dit est configurée pour être disposée ou insérée, d'une part, autour du support de couple 21 et, d'autre part, autour d'une partie du carter 17 de l'actionneur électromécanique 11, en particulier de la première extrémité 17a du carter 17, notamment dans la configuration assemblée de l'actionneur électromécanique 11. Dans un tel cas, la couronne 24 peut être montée libre en rotation, d'une part, autour du support de couple 21 et, d'autre part, autour du carter 17 de l'actionneur électromécanique 11.

Avantageusement, le support de couple 21 comprend, en outre, un couvercle 22. Le couvercle 22 est monté, autrement dit est configuré pour être monté, sur le support de couple 21, notamment sur la deuxième partie 21b du support de couple 21, en particulier dans la configuration assemblée de l'actionneur électromécanique 11.

Avantageusement, l'unité de contrôle 15 est disposée au moins en partie à l'intérieur du carter 17 de l'actionneur électromécanique 11.

Par ailleurs, l'unité de contrôle 15 peut être disposée au moins en partie à l'extérieur du carter 17 de l'actionneur électromécanique 11 et, en particulier, montée dans le support de couple 21 ou dans l'un des supports 23.

Avantageusement, l'unité de contrôle 15 comprend une première carte électronique, non représentée, et une deuxième carte électronique, non représentée.

Ici, la première carte électronique de l'unité de contrôle 15 est disposée à l'intérieur du carter 17 de l'actionneur électromécanique 11, en particulier dans la configuration assemblée de l'actionneur électromécanique 11. En outre, la deuxième carte électronique est disposée à l'intérieur du support de couple 21 de l'actionneur électromécanique 11, en particulier dans la configuration assemblée de l'actionneur électromécanique 11.

Avantageusement, la première carte électronique est configurée pour contrôler le moteur électrique 16. En outre, la deuxième carte électronique est configurée pour, notamment, accéder à des fonctions de paramétrage et/ou de configuration de l'actionneur électromécanique 11, au moyen de dispositifs de sélection 61, dont un seul est représenté à la figure 3, et, éventuellement, de dispositifs d'affichage, non représentés.

Ici, l'unité de contrôle 15, en particulier chacune des première et deuxième cartes électroniques, est alimentée en énergie électrique au moyen du câble d'alimentation électrique 18.

Avantageusement, le support de couple 21 comprend, autrement dit intègre, au moins un dispositif de sélection 61, en particulier un bouton, pouvant être, par exemple, de type poussoir ou magnétique. En outre, le ou chaque dispositif de sélection 61 est configuré, notamment, pour réaliser un réglage de l'actionneur électromécanique 11 au travers d'un ou plusieurs modes de configuration, pour appairer avec l'actionneur électromécanique 11 une ou plusieurs unités de commande 12, 13, pour réinitialiser un ou plusieurs paramètres, pouvant être, par exemple, une position de fin de course, pour réinitialiser la ou les unités de commande 12, 13 appairées ou encore pour commander le déplacement de l'écran 2.

Avantageusement, le support de couple 21 comprend, autrement dit intègre, au moins un dispositif d'affichage, non représenté. En outre, le ou chaque dispositif d'affichage est configuré, notamment, pour afficher une indication visuelle, pouvant être, par exemple, représentative d'un mode de fonctionnement de l'actionneur électromécanique 11, en particulier un mode de configuration ou un mode de commande, ou encore d'un état d'un organe du dispositif d'entraînement motorisé 5.

Avantageusement, l'actionneur électromécanique 11 comprend, en outre, un dispositif de transmission de couple 31.

Ici, le dispositif de transmission de couple 31 est constitué d'un organe monobloc, pouvant également être appelé cardan.

Le dispositif de transmission de couple 31 est logé, autrement dit est monté, à l'intérieur du carter 17 de l'actionneur électromécanique 11, en particulier dans la configuration assemblée de l'actionneur électromécanique 11.

Ici, l'arbre d'entrée 43 du réducteur 19 est accouplé, autrement dit est configuré pour être accouplé, avec le rotor 16a du moteur électrique 16 par l'intermédiaire du dispositif de transmission de couple 31, en particulier dans la configuration assemblée de l'actionneur électromécanique 11.

Avantageusement, le dispositif de transmission de couple 31 comprend un premier logement 54. Le premier logement 54 reçoit, autrement dit est configuré pour recevoir ou pour loger, une partie de l'arbre 53 du rotor 16a du moteur électrique 16, en particulier dans la configuration assemblée de l'actionneur électromécanique 11.

Ici, la partie de l'arbre 53 du rotor 16a du moteur électrique 16 est en contact direct avec le premier logement 54 du dispositif de transmission de couple 31.

Avantageusement, le premier logement 54 du dispositif de transmission de couple 31 présente une première forme, en particulier en forme de croix. La partie de l'arbre 53 du rotor 16a présente une deuxième forme, en particulier en forme de méplat, telle que, par exemple, l'extrémité libre d'un tournevis plat. En outre, la deuxième forme de la partie de l'arbre 53 du rotor 16a est configurée pour être insérée, autrement dit est insérée, à l'intérieur de la première forme du premier logement 54 du dispositif de transmission de couple 31, en particulier dans la configuration assemblée de l'actionneur électromécanique 11.

En variante, non représentée, la première forme du premier logement 54 du dispositif de transmission de couple 31 est en forme de fente.

Dans une autre variante, non représentée, la première forme du premier logement 54 du dispositif de transmission de couple 31 comprend des trous, pouvant être, par exemple, au nombre de deux. En outre, la deuxième forme de la partie de l'arbre 53 du rotor 16a comprend des pions, tels que sous la forme d'une fourchette et pouvant être, par exemple, au nombre de deux.

Également dans une autre variante, non représentée, la première forme du premier logement 54 du dispositif de transmission de couple 31 est une forme d'étoile ou de denture interne. En outre, la deuxième forme de la partie de l'arbre 53 du rotor 16a est une forme d'étoile ou de denture externe, complémentaire de celle du premier logement 54.

En variante, non représentée, le dispositif de transmission de couple 31 comprend, en outre, un adaptateur. L'adaptateur est monté, autrement dit est configuré pour être monté, sur une partie de l'arbre 53 du rotor 16a du moteur électrique 16, en particulier dans la configuration assemblée de l'actionneur électromécanique 11. Le montage peut être réalisé, par exemple, par un emmanchement en force de l'adaptateur sur la partie de l'arbre 53 du rotor 16a. Dans ce cas, le premier logement 54 reçoit, autrement dit est configuré pour recevoir ou pour loger, la partie de l'arbre 53 du rotor 16a du moteur électrique 16 par l'intermédiaire de l'adaptateur, en particulier dans la configuration assemblée de l'actionneur électromécanique 11. Ainsi, la partie de l'arbre 53 du rotor 16a du moteur électrique 16 est en contact avec le premier logement 54 du dispositif de transmission de couple 31 au travers de l'adaptateur.

Avantageusement, le dispositif de transmission de couple 31 comprend un deuxième logement 55. Le deuxième logement 55 reçoit, autrement dit est configuré pour recevoir ou pour loger, une partie du pignon solaire 40 du premier étage de réduction 37, en particulier dans la configuration assemblée de l'actionneur électromécanique 11.

Ainsi, le dispositif de transmission de couple 31 permet de transmettre le couple fourni par le moteur électrique 16 vers le réducteur 19, en particulier vers le premier étage de réduction 37.

Avantageusement, le deuxième logement 55 du dispositif de transmission de couple 31 présente une première forme, en particulier en forme de denture interne. La partie du pignon solaire 40 du premier étage de réduction 37 présente une deuxième forme, en particulier la première denture 42. En outre, la deuxième forme du pignon solaire 40 du premier étage de réduction 37 est configurée pour être insérée, autrement dit est insérée, à l'intérieur de la première forme du deuxième logement 55 du dispositif de transmission de couple 31, en particulier dans la configuration assemblée de l'actionneur électromécanique 11.

Avantageusement, le dispositif de transmission de couple 31 comprend un troisième logement 56. Le troisième logement 56 reçoit, autrement dit est configuré pour recevoir ou pour loger, l'arbre 59 du pignon solaire 40 du premier étage de réduction 37, en particulier dans la configuration assemblée de l'actionneur électromécanique 11.

En variante, non représentée, le dispositif de transmission de couple 31 comprend, en outre, un élément d'accouplement. Avantageusement, l'élément d'accouplement est assemblé, autrement dit est configuré pour être assemblé, à l'intérieur du deuxième logement 55 du dispositif de transmission de couple 31, en particulier dans une configuration assemblée du dispositif de transmission de couple 31. Avantageusement, l'élément d'accouplement est assemblé sur l'arbre 59 du pignon solaire 40 du premier étage de réduction 37. Avantageusement, l'organe monobloc formant le dispositif de transmission de couple 31 et l'élément d'accouplement sont deux pièces distinctes qui sont assemblées l'une avec l'autre, de sorte à être solidaires entre elles. Ainsi, le dispositif de transmission de couple 31 est un sous-ensemble constitué par l'organe monobloc et l'élément d'accouplement, de sorte à transmettre un couple entre le rotor 16a du moteur électrique 16 et l'arbre d'entrée 43 du réducteur 19, en particulier lors de l'activation électrique du moteur électrique 16 provoquant l'entraînement en rotation du rotor 16a.

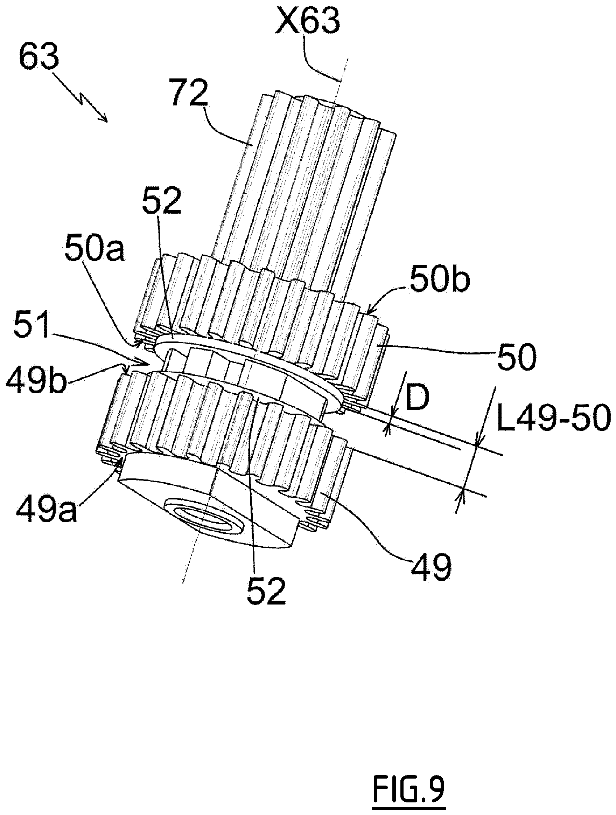

On décrit à présent, plus en détail et en référence aux figures 6 à 10, la construction de chaque étage de réduction 37, 38, 39 et, plus particulièrement, celle du premier étage de réduction 37 appartenant au réducteur 19.

Le pignon solaire 40 comprend la première denture 42 et une deuxième denture 64.

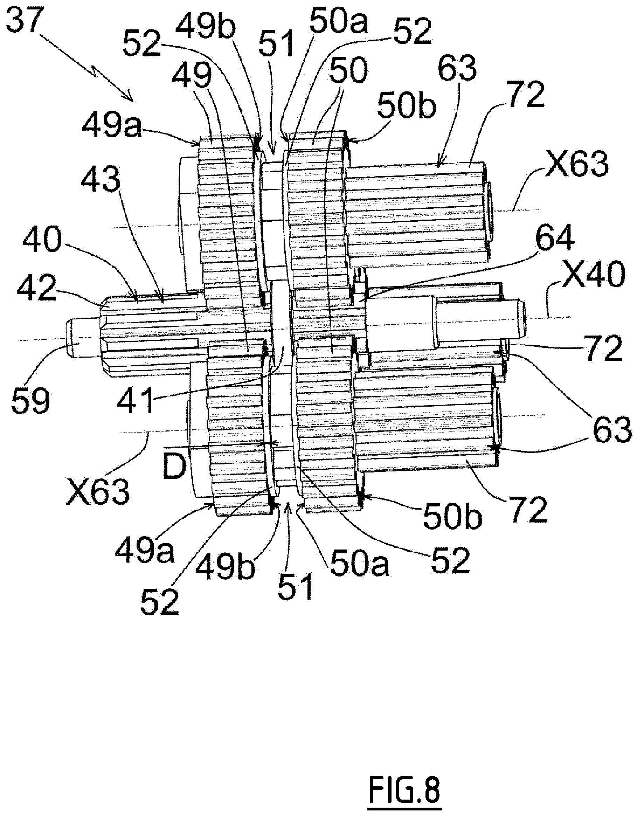

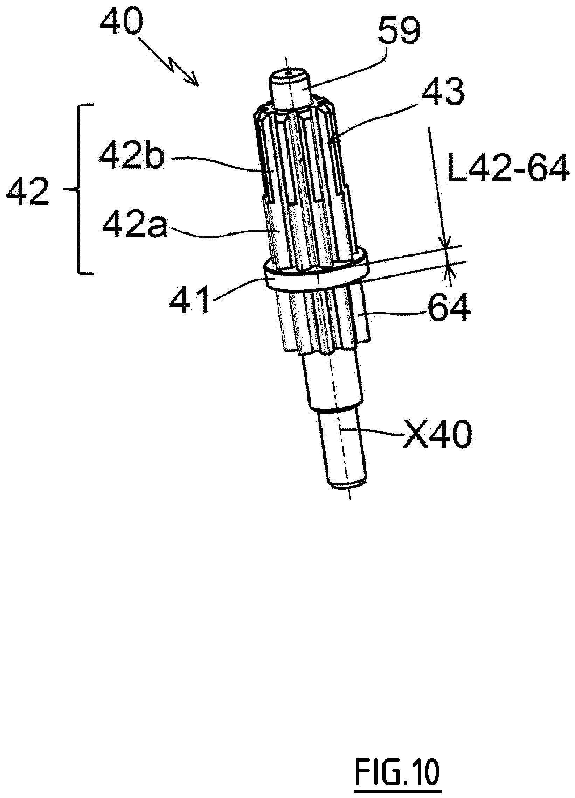

Avantageusement, la première denture 42 du pignon solaire 40 comprend une première partie 42a et une deuxième partie 42b. En outre, les dents de la deuxième partie 42b de la première denture 42 sont tronquées, comme visible aux figures 8 et 10.

Par ailleurs, les dents de la première partie 42a de la première denture 42 sont complètes, autrement dit non-tronquées.

En variante, non représentée, les dents de la première partie 42a de la première denture 42 sont tronquées comme celles de deuxième partie 42b de la première denture 42.

Ici, la première denture 42 du pignon solaire 40 du premier étage de réduction 37, en particulier la deuxième partie 42b de la première denture 42, est configurée pour être insérée, autrement dit est insérée, à l'intérieur de la première forme du deuxième logement 55 du dispositif de transmission de couple 31, en particulier dans la configuration assemblée de l'actionneur électromécanique 11.

Ici, la troncature des dents de la deuxième partie 42b de la première denture 42 permet d'obtenir une liaison glissante entre la première denture 42 du pignon solaire 40 et la première forme du deuxième logement 55 du dispositif de transmission de couple 31.

De cette manière, l'insertion de la deuxième partie 42b de la première denture 42 du pignon solaire 40 à l'intérieur de la première forme du deuxième logement 55 du dispositif de transmission de couple 31 est facilitée.

Par conséquent, la troncature des dents de la deuxième partie 42b de la première denture 42 facilite le recentrage de la deuxième partie 42b de la première denture 42 du pignon solaire 40 à l'intérieur de la première forme du deuxième logement 55 du dispositif de transmission de couple 31 en ayant une portée de forme arrondie et non avec des arêtes, ce qui serait le cas si les dents de la deuxième partie 42b de la première denture 42 n'étaient pas tronquées.

En variante, la troncature des dents de la deuxième partie 42b de la première denture 42 permet d'obtenir une liaison serrante entre la première denture 42 du pignon solaire 40 et la première forme du deuxième logement 55 du dispositif de transmission de couple 31.

Ici, la première denture 42 du pignon solaire 40 du premier étage de réduction 37, en particulier la deuxième partie 42b de la première denture 42, constitue l'arbre d'entrée 43 du réducteur 19.

Ainsi, le pignon solaire 40 du premier étage de réduction 37 est solidaire de l'arbre d'entrée 43 du réducteur 19.

Les première et deuxième dentures 42, 64 sont disposées côte à côte à une première distance L42-64 prédéterminée l'une de l'autre et séparées par une collerette 41, selon une direction définie par l'axe de rotation X40 du pignon solaire 40.

Ici, la première distance L42-64 prédéterminée correspond à une largeur de la collerette 41.

Chaque pignon satellite 63 comprend une troisième denture 49 et une quatrième denture 50.

Les troisième et quatrième dentures 49, 50 sont disposées côte à côte à une deuxième distance L49-50 prédéterminée l'une de l'autre, selon une direction définie par l'axe de rotation X63 du pignon satellite 63, de sorte à former une fente 51 entre les troisième et quatrième dentures 49, 50.

Ici, la deuxième distance L49-50 prédéterminée correspond à une largeur de la fente 51.

La collerette 41 du pignon solaire 40 est disposée à l'intérieur de la fente 51 ménagée entre les troisième et quatrième dentures 49, 50 du pignon satellite 63, en particulier dans la configuration assemblée du réducteur 19.

Ici, la première distance L42-64 prédéterminée est strictement inférieure à la deuxième distance L49-50 prédéterminée.

Chacune des troisième et quatrième dentures 49, 50 de chaque pignon satellite 63 comprend un premier flanc 49a, 50a et un deuxième flanc 49b, 50b. Le deuxième flanc 49b, 50b est opposé au premier flanc 49a, 50a.

Les premier et deuxième flancs 49a, 49b, 50a, 50b sont orthogonaux à l'axe de rotation X63 du pignon satellite 63.

Le deuxième flanc 49b de la troisième denture 49 et le premier flanc 50a de la quatrième denture 50 sont disposés en vis-à-vis, selon la direction de l'axe de rotation X63 du pignon satellite 63

Le deuxième flanc 49b de la troisième denture 49 et le premier flanc 50a de la quatrième denture 50 définissent entre eux la fente 51 du pignon satellite 63.

Le deuxième flanc 49b de la troisième denture 49 et le premier flanc 50a de la quatrième denture 50 comprennent respectivement une portée 52.

En outre, les portées 52 ménagées sur le deuxième flanc 49b de la troisième denture 49 et le premier flanc 50a de la quatrième denture 50 sont configurées pour guider, autrement dit guident, la collerette 41 du pignon solaire 40, selon la direction de l'axe de rotation X40 du pignon solaire 40, en particulier dans la configuration assemblée du réducteur 19.

Chacune des portées 52 constitue, par conséquent, respectivement une partie du deuxième flanc 49b de la troisième denture 49 et du premier flanc 50a de la quatrième denture 50 qui sert de surface d'appui à la collerette 41 du pignon solaire 40.

Chacune des portées 52 est définie par une surface décalée d'une distance D non nulle par rapport à une surface constituant le deuxième flanc 49b de la troisième denture 49 ou le premier flanc 50a de la quatrième denture 50 vers l'intérieur de la fente 51, selon la direction de l'axe de rotation X63 du pignon satellite 63.

Ainsi, la collerette 41 du pignon solaire 40 peut venir en contact, autrement dit est configurée pour venir en contact et, par conséquent, frotter, contre les portées 52 en saillie par rapport au deuxième flanc 49b de la troisième denture 49 et au premier flanc 50a de la quatrième denture 50 de chaque pignon satellite 63, lors d'un entraînement en rotation du pignon solaire 40, sans frotter contre le deuxième flanc 49b de la troisième denture 49 et le premier flanc 50a de la quatrième denture 50 de chaque pignon satellite 63.

La collerette 41 du pignon solaire 40 est donc guidée, autrement dit est recentrée, par les portées 52 ménagées sur le deuxième flanc 49b de la troisième denture 49 et le premier flanc 50a de la quatrième denture 50 de chaque pignon satellite 63, et non pas directement par le deuxième flanc 49b de la troisième denture 49 et le premier flanc 50a de la quatrième denture 50 de chaque pignon satellite 63.

De cette manière, la présence des portées 52 ménagées sur le deuxième flanc 49b de la troisième denture 49 et le premier flanc 50a de la quatrième denture 50 de chaque pignon satellite 63 permet d'améliorer le rendement et de réduire le bruit de fonctionnement du ou de chaque étage de réduction 37, 38, 39 et, plus particulièrement, du premier étage de réduction 37.

En outre, cette solution permet de réduire le niveau d'exigence qualité du pignon solaire 40 et des pignons satellites 63, en diminuant l'exigence sur les défauts géométriques des premiers et deuxièmes flancs 49a, 49b, 50a, 50b des troisième et quatrième dentures 49, 50 des pignons satellites 63 et sur la collerette 41 du pignon solaire 40.

De cette manière, la fabrication du pignon solaire 40 et des pignons satellites 63 est facilitée et est moins onéreuse.

Par ailleurs, la fabrication du pignon solaire 40 et des pignons satellites 63 est plus aisée lorsque ceux-ci sont obtenus par un procédé de moulage d'une matière plastique.

Avantageusement, les portées 52 correspondent respectivement à une surépaisseur par rapport au deuxième flanc 49b de la troisième denture 49 et par rapport au premier flanc 50a de la quatrième denture 50. Cette surépaisseur s'étend selon la direction de l'axe de rotation X63 du pignon satellite 63 et selon une direction radiale à cet axe de rotation X63, donc selon la direction de l'axe de rotation X40 du pignon solaire 40 et selon une direction radiale à cet axe de rotation X40, en particulier dans la configuration assemblée du réducteur 19.

Ici, chacune des portées 52 a une forme de cylindre s'étendant respectivement à partir du deuxième flanc 49b de la troisième denture 49 ou du premier flanc 50a de la quatrième denture 50 vers l'intérieur de la fente 51, selon la direction de l'axe de rotation X63 du pignon satellite 63.

Avantageusement, les première et deuxième dentures 42, 64 sont des dentures droites. En outre, les troisième et quatrième dentures 49, 50 sont des dentures droites.

Avantageusement, la deuxième denture 64 du pignon solaire 40 est décalée angulairement d'un demi pas par rapport à la première denture 42 du pignon solaire 40, autour de l'axe de rotation X40 de ce pignon solaire 40.

En variante, non représentée, la deuxième denture 64 du pignon solaire 40 est calée angulairement, autrement dit ne présente pas de décalage angulaire, par rapport à la première denture 42 du pignon solaire 40, autour de l'axe de rotation X40 de ce pignon solaire 40.

Avantageusement, le type de train d'engrenage épicycloïdal formé par le premier étage de réduction 37 est de type 2.

Grâce à la présente invention, la collerette du pignon solaire peut venir en contact et, par conséquent, frotter contre les portées en saillie par rapport au deuxième flanc de la troisième denture et au premier flanc de la quatrième denture de chaque pignon satellite, lors d'un entraînement en rotation du pignon solaire, sans frotter contre le deuxième flanc de la troisième denture et le premier flanc de la quatrième denture de chaque pignon satellite.

De nombreuses modifications peuvent être apportées aux exemples de réalisation décrits précédemment, sans sortir du cadre de l'invention défini par les revendications.

En variante, non représentée, le frein 25 est un frein à came, un frein magnétique ou un frein électromagnétique.

En variante, non représentée, le frein 25 est configuré pour être disposé, autrement dit est disposé, dans la configuration assemblée de l'actionneur électromécanique 11, entre l'unité de contrôle 15 et le moteur électrique 16, autrement dit à l'entrée du moteur électrique 16, ou entre le réducteur 19 et l'arbre de sortie 20 de l'actionneur électromécanique 11, autrement dit à la sortie du réducteur 19, ou encore entre le moteur électrique 16 et le réducteur 19, c'est-à-dire à la sortie du moteur électrique 16. Dans le cas où le frein est disposé entre le moteur électrique 16 et le réducteur 19, l'arbre d'entrée 43 du réducteur 19 est accouplé, autrement dit est configuré pour être accouplé, avec le rotor 16a du moteur électrique 16 par l'intermédiaire du dispositif de transmission de couple 31 et du frein 25, en particulier dans la configuration assemblée de l'actionneur électromécanique 11.

En outre, les modes de réalisation et variantes envisagés peuvent être combinés pour générer de nouveaux modes de réalisation de l'invention, sans sortir du cadre de l'invention défini par les revendications.

## Revendications

1. Réducteur (19) pour un actionneur électromécanique (11),
le réducteur (19) comprenant au moins :
- un arbre d'entrée (43),
- un étage de réduction (37, 38, 39) de type épicycloïdal,
- une couronne (65), la couronne (65) comprenant une denture interne (32), et
- un arbre de sortie (58),
l'étage de réduction (37, 38, 39) comprenant au moins :
- un pignon solaire (40),
- une pluralité de pignons satellites (63), le pignon solaire (40) étant engrené avec chaque pignon satellite (63), chaque pignon satellite (63) étant engrené avec la denture interne (32) de la couronne (65), et
- un porte-satellites (66), le porte-satellites (66) supportant chacun des pignons satellites (63) en rotation, autour d'un axe de rotation (X63),
le pignon solaire (40) comprenant :
- une première denture (42), et
- une deuxième denture (64), les première et deuxième dentures (42, 64) étant disposées côte à côte à une première distance (L42-64) prédéterminée l'une de l'autre et séparées par une collerette (41), selon une direction définie par un axe de rotation (X40) du pignon solaire (40),
chaque pignon satellite (63) comprenant :
- une troisième denture (49), et
- une quatrième denture (50), les troisième et quatrième dentures (49, 50) étant disposées côte à côte à une deuxième distance (L49-50) prédéterminée l'une de l'autre, selon une direction définie par l'axe de rotation (X63) du pignon satellite (63), de sorte à former une fente (51) entre les troisième et quatrième dentures (49, 50), la collerette (41) du pignon solaire (40) étant disposée à l'intérieur de la fente (51) ménagée entre les troisième et quatrième dentures (49, 50) du pignon satellite (63),
chacune des troisième et quatrième dentures (49, 50) de chaque pignon satellite (63) comprenant un premier flanc (49a, 50a) et un deuxième flanc (49b, 50b), le deuxième flanc (49b, 50b) étant opposé au premier flanc (49a, 50a), les premier et deuxième flancs (49a, 49b, 50a, 50b) étant orthogonaux à l'axe de rotation (X63) du pignon satellite (63), le deuxième flanc (49b) de la troisième denture (49) et le premier flanc (50a) de la quatrième denture (50) étant disposés en vis-à-vis, selon la direction de l'axe de rotation (X63) du pignon satellite (63), et le deuxième flanc (49b) de la troisième denture (49) et le premier flanc (50a) de la quatrième denture (50) définissant entre eux la fente (51) du pignon satellite (63),
**caractérisé**
**en ce que** le deuxième flanc (49b) de la troisième denture (49) et le premier flanc (50a) de la quatrième denture (50) comprennent respectivement une portée (52), en ce que les portées (52) ménagées sur le deuxième flanc (49b) de la troisième denture (49) et le premier flanc (50a) de la quatrième denture (50) guident la collerette (41) du pignon solaire (40), selon la direction de l'axe de rotation (X40) du pignon solaire (40),
et **en ce que** chacune des portées (52) est définie par une surface décalée d'une distance (D) non nulle par rapport à une surface constituant le deuxième flanc (49b) de la troisième denture (49) ou le premier flanc (50a) de la quatrième denture (50) vers l'intérieur de la fente (51), selon la direction de l'axe de rotation (X63) du pignon satellite (63).

2. Réducteur (19) pour un actionneur électromécanique (11) selon la revendication 1, **caractérisé**
**en ce que** les première et deuxième dentures (42, 64) sont des dentures droites,
et **en ce que** les troisième et quatrième dentures (49, 50) sont des dentures droites.

3. Réducteur (19) pour un actionneur électromécanique (11) selon la revendication 1 ou selon la revendication 2, **caractérisé en ce que** la deuxième denture (64) est décalée angulairement d'un demi pas par rapport à la première denture (42), autour de l'axe de rotation (X40) du pignon solaire (40).

4. Réducteur (19) pour un actionneur électromécanique (11) selon l'une quelconque des revendications 1 à 3, **caractérisé en ce que** les portées (52) correspondent respectivement à une surépaisseur par rapport au deuxième flanc (49b) de la troisième denture (49) et par rapport au premier flanc (50a) de la quatrième denture (50), s'étendant selon la direction de l'axe de rotation (X63) du pignon satellite (63) et selon une direction radiale à l'axe de rotation (X63) du pignon satellite (63).

5. Réducteur (19) pour un actionneur électromécanique (11) selon l'une quelconque des revendications 1 à 4, **caractérisé**
**en ce que** la première denture (42) du pignon solaire (40) comprend une première partie (42a) et une deuxième partie (42b),
**en ce que** les dents de la deuxième partie (42b) de la première denture (42) sont tronquées,
et **en ce que** la deuxième partie (42b) de la première denture (42) constitue l'arbre d'entrée (43) du réducteur (19).

6. Réducteur (19) pour un actionneur électromécanique (11) selon l'une quelconque des revendications 1 à 5, **caractérisé**
**en ce que** la première distance (L42-64) prédéterminée correspond à une largeur de la collerette (41),
et **en ce que** la deuxième distance (L49-50) prédéterminée correspond à une largeur de la fente (51).

7. Réducteur (19) pour un actionneur électromécanique (11) selon l'une quelconque des revendications 1 à 6, **caractérisé en ce que** chacune des portées (52) a une forme de cylindre s'étendant respectivement à partir du deuxième flanc (49b) de la troisième denture (49) ou du premier flanc (50a) de la quatrième denture (50) vers l'intérieur de la fente (51), selon la direction de l'axe de rotation (X63) du pignon satellite (63).

8. Actionneur électromécanique (11) pour un dispositif d'occultation (3), l'actionneur électromécanique (11) comprenant au moins :
- un carter (17),
- un moteur électrique (16), et
- un réducteur (19) conforme à l'une quelconque des revendications 1 à 7, le réducteur (19) étant accouplé avec le moteur électrique (16),
le moteur électrique (16) et le réducteur (19) étant logés à l'intérieur du carter (17).

9. Actionneur électromécanique (11) pour un dispositif d'occultation (3) selon la revendication 8, **caractérisé**
**en ce que** l'actionneur électromécanique (11) comprend, en outre, un dispositif de transmission de couple (31),
**en ce que** le dispositif de transmission de couple (31) comprend un logement (55),
et **en ce que** la première denture (42) du pignon solaire (40) est insérée à l'intérieur d'une forme du logement (55) du dispositif de transmission de couple (31).

10. Dispositif d'occultation (3),
le dispositif d'occultation (3) comprenant au moins :
- un écran (2), et
- un actionneur électromécanique (11) conforme à la revendication 8 ou à la revendication 9, l'écran (2) étant entraîné en déplacement par l'actionneur électromécanique (11).
